# EUROPEAN PATENT SPECIFICATION

(11) **EP 3 345 482 B1**
(45) Date of publication and mention of the grant of the patent: **17.11.2021**
(21) Application number: 16841975.2
(22) Date of filing: 01.09.2016
(51) Int. Cl.: A01N 25/14, A01N 25/10, A01N 43/56, A01N 43/78, A01N 43/84, A01N 47/00, A01N 47/38, A01P 3/00, A01P 13/00

(54) **COMPOSITION, METHOD FOR PRODUCING COMPOSITION, AND PESTICIDE COMPOSITION**
ZUSAMMENSETZUNG, VERFAHREN ZUR HERSTELLUNG EINER ZUSAMMENSETZUNG UND PESTIZIDZUSAMMENSETZUNG
COMPOSITION, PROCÉDÉ DE PRODUCTION D'UNE COMPOSITION, ET COMPOSITION PESTICIDE

(30) Priority: 04.09.2015 JP 2015174433
(43) Date of publication of application: 11.07.2018
(73) Proprietor: Sumitomo Chemical Company, Limited, Tokyo 104-8260 (JP)
(72) Inventor: RUSU Ai, Takarazuka-shi Hyogo 665-8555 (JP); WATANABE Atsushi, Takarazuka-shi Hyogo 665-8555 (JP)
(74) Representative: Vossius & Partner Patentanwälte Rechtsanwälte mbB
(86) International application number: PCT/JP2016/075703
(87) International publication number: WO 2017/038946

(56) References cited:
- EP-A1- 0 794 198
- JP-A- H 035 404
- JP-A- H 101 403
- JP-A- S58 131 902
- JP-A- 2002 293 702
- JP-A- 2009 540 032
- US-A- 3 791 811
- US-A1- 2009 258 953

## Description

### Technical Field

The present invention relates to a composition, a production method for a composition, and an agrochemical composition.

### Background Art

Some chemicals used as agrochemical active compounds are poorly water soluble, thus unlikely to be absorbed from roots, leaves, or the like, and not fully utilized as agrochemicals despite their excellent pharmacological action.

On the other hand, a solid dispersion technique is a known technique for improving the water solubility of poorly water-soluble chemicals. Solid dispersions of chemicals generally refer to chemicals dispersed in solid media (bases).

As a base for preparing a solid dispersion, a polyvinyl alcohol copolymer is known, which is obtained by polymerizing polyvinyl alcohol and a polymerizable vinyl monomer such as acrylic acid (see, for example, Patent Literature 1).

Patent Literature 2 discloses a wettable insecticide composition using a modified polyvinyl alcohol as a dispersant, which is a simple mixture of an insecticidal component and a polymer. Patent Literature 3 discloses an agrochemical granule composition comprising a polyvinyl alcohol with sulfonate groups wherein the granule composition is granulated by an extrusion granulator after water has been added to the composition comprising the polyvinyl alcohol and blended.

### Citation List

### Patent Literature

Patent Literature 1: WO2008/133102
Patent Literature 2: EP 0 794 198 A1
Patent Literature 3: JP H10 1403 A

### Summary of Invention

### Technical Problem

However, even when the above-described polyvinyl alcohol copolymer is used as a base for preparing a solid dispersion, it cannot be said that the ability to improve the water solubility of poorly water-soluble chemicals is sufficient.

An object of the present invention is to provide a composition having a remarkable ability to improve the water solubility of a poorly water-soluble agrochemical active compound and a method for producing such a composition. Another object of the present invention is to provide an agrochemical composition having a remarkable ability to improve the water solubility of a poorly water-soluble agrochemical active compound.

### Solution to Problem

As a result of having conducted diligent research, the inventors found that the water solubility of a poorly water-soluble agrochemical active compound is greatly improved with a saponification product of polyvinyl acetate comprising at least one selected from the group consisting of a sulfonic acid group and a sulfonate group, and accomplished the present invention.

That is to say, the present invention provides a composition comprising a poorly water-soluble agrochemical active compound and a solid medium comprising a saponification product of polyvinyl acetate comprising at least one selected from the group consisting of a sulfonic acid group and a sulfonate group, wherein the poorly water-soluble agrochemical active compound is dispersed in the solid medium in an amorphous state or in a semi-amorphous state, and the poorly water-soluble agrochemical active compound refers to an agrochemical active compound that has a water solubility of less than 200 ppm at 25°C.

The composition according to the present invention has a remarkable ability to improve the water solubility of a poorly water-soluble agrochemical active compound. Moreover, the composition according to the present invention is readily producible.

In the composition, the mass ratio of the poorly water-soluble agrochemical active compound to the saponification product (the poorly water-soluble agrochemical active compound : the saponification product) may be 7:3 to 1:15. Accordingly, the ability to improve the water solubility of the poorly water-soluble agrochemical active compound is further improved.

The degree of saponification of the saponification product may be 10 to 100 mol%. Accordingly, the ability to improve the water solubility of the poorly water-soluble agrochemical active compound is further improved.

The poorly water-soluble agrochemical active compound may be flumioxazin, N-(1,1,3-trimethylindan-4-yl)-1-methyl-3-difluoromethylpyrazole-4-carboxylic acid amide, 1-[2-({[1-(4-chlorophenyl)-1H-pyrazol-3-yl]oxy}methyl)-3-methylphenyl]-4-methyl-5-oxo-4,5-dihydro-1H-tetrazole, ethaboxam, or 2-[3-(ethanesulfonyl)pyridin-2-yl]-5-(trifluoromethanesulfonyl)benzoxazole. The composition of the present invention also has a remarkable ability to improve the water solubility of such a poorly water-soluble agrochemical active compound.

The method for producing a composition according to the present invention comprises a step of dissolving a poorly water-soluble agrochemical active compound and a solid medium comprising a saponification product of polyvinyl acetate comprising at least one selected from the group consisting of a sulfonic acid group and a sulfonate group in an organic solvent to prepare a solution, and a step of spray-drying the solution. The method for producing a composition according to the present invention comprises a step of mixing a poorly water-soluble agrochemical active compound and a solid medium comprising a saponification product of polyvinyl acetate comprising at least one selected from the group consisting of a sulfonic acid group and a sulfonate group to obtain a mixture, and a step of granulating the mixture by melt extrusion. According to these production methods, the above composition can be easily produced. The composition according to the present invention may be produced by these production methods. That is to say, the present invention provides a composition obtainable by the above production method.

The agrochemical composition according to the present invention comprises the above composition. Such an agrochemical composition has a remarkable ability to improve the water solubility of a poorly water-soluble agrochemical active compound.

The agrochemical composition according to the present invention may comprise the above composition and an aromatic sulfonic acid type polymeric surfactant. With such an agrochemical composition, the water solubility of the poorly water-soluble agrochemical active compound can be maintained at a high level for a longer period of time.

The aromatic sulfonic acid type polymeric surfactant may be at least one selected from the group consisting of a lignosulfonate, a salt of a condensate of alkylarylsulfonic acid and formaldehyde, a salt of a condensate of arylsulfonic acid and formaldehyde, and a salt of a condensate of arylsulfonic acid and alkylarylsulfonic acid and formaldehyde. With such an aromatic sulfonic acid type polymeric surfactant, the water solubility of the poorly water-soluble agrochemical active compound can be maintained at a high level for a yet longer period of time.

The poorly water-soluble agrochemical active compound in the above agrochemical composition may be flumioxazin, or 1-[2-({[1-(4-chlorophenyl)-1H-pyrazol-3-yl]oxy}methyl)-3-methylphenyl]-4-methyl-5-oxo-4,5-dihydro-1H-tetrazole.

The mass ratio of the poorly water-soluble agrochemical active compound to the aromatic sulfonic acid type polymeric surfactant (the poorly water-soluble agrochemical active compound : the aromatic sulfonic acid type polymeric surfactant) may be 2:1 to 1:10. With such an agrochemical composition, the water solubility of the poorly water-soluble agrochemical active compound can be maintained at a high level for a yet longer period of time.

### Advantageous Effects of Invention

The present invention can provide a composition having a remarkable ability to improve the water solubility of a poorly water-soluble agrochemical active compound. The composition according to the present invention is also readily producible. Moreover, the present invention can provide a method for producing such a composition. Furthermore, the present invention can provide an agrochemical composition having a remarkable ability to improve the water solubility of a poorly water-soluble agrochemical active compound and an agrochemical composition capable of maintaining the water solubility of a poorly water-soluble agrochemical active compound at a high level for a longer period of time.

### Brief Description of Drawings

Fig. 1 is a diagram showing the result of powder X-ray diffraction measurement of powder A according to Production Example 1;
Fig. 2 is a diagram showing the result of powder X-ray diffraction measurement of powder B according to Production Example 2;
Fig. 3 is a diagram showing the result of powder X-ray diffraction measurement of powder C according to Production Example 3;
Fig. 4 is a diagram showing the result of powder X-ray diffraction measurement of powder D according to Production Example 4;
Fig. 5 is a diagram showing the result of powder X-ray diffraction measurement of powder E according to Production Example 5;
Fig. 6 is a diagram showing the result of powder X-ray diffraction measurement of powder F according to Production Example 6;
Fig. 7 is a diagram showing the result of powder X-ray diffraction measurement of powder G according to Production Example 7;
Fig. 8 is a diagram showing the result of powder X-ray diffraction measurement of powder H according to Production Example 8; Fig. 9 is a diagram showing the result of powder X-ray diffraction measurement of powder I according to Production Example 9;
Fig. 10 is a diagram showing the result of powder X-ray diffraction measurement of powder J according to Production Example 10;
Fig. 11 is a diagram showing the result of powder X-ray diffraction measurement of comparative powder K according to Production Example 11;
Fig. 12 is a diagram showing the result of powder X-ray diffraction measurement of comparative powder L according to Production Example 13;
Fig. 13 is a diagram showing the result of powder X-ray diffraction measurement of comparative powder M according to Production Example 14;
Fig. 14 is a diagram showing the result of powder X-ray diffraction measurement of comparative powder N according to Production Example 15;
Fig. 15 is a diagram showing the result of powder X-ray diffraction measurement of comparative powder O according to Production Example 16;
Fig. 16 is a diagram showing the result of powder X-ray diffraction measurement of comparative powder P according to Production Example 17;
Fig. 17 is a diagram showing the result of powder X-ray diffraction measurement of comparative powder Q according to Production Example 18;
Fig. 18 is a diagram showing the result of powder X-ray diffraction measurement of comparative powder R according to Production Example 19;
Fig. 19 is a diagram showing the result of powder X-ray diffraction measurement of comparative powder S according to Production Example 20;

### Description of Embodiments

Below, preferred embodiments of the present invention are described. However, the present invention is not limited to the following embodiments.

The composition according to one embodiment comprises a poorly water-soluble agrochemical active compound and a solid medium comprising a saponification product of polyvinyl acetate comprising at least one selected from the group consisting of a sulfonic acid group and a sulfonate group. The poorly water-soluble agrochemical active compound is dispersed in the solid medium. Specific examples of the composition include solid dispersions. Such a composition has a remarkable ability to improve the water solubility of the poorly water-soluble agrochemical active compound. Here, in this specification, the ability to improve the water solubility of a poorly water-soluble agrochemical active compound refers to the rate of improvement of the solubility of a poorly water-soluble agrochemical active compound in water relative to the solubility of the poorly water-soluble agrochemical active compound when dissolved alone in water. The above composition may be in the form of, for example, particles. When the above composition is in the form of particles, the poorly water-soluble agrochemical active compound is dispersed in the particles, for example.

The poorly water-soluble agrochemical active compound is dispersed in the solid medium in an amorphous state or in a semi-amorphous state. From the viewpoint of the water solubility of the poorly water-soluble agrochemical active compound and a further improvement of the ability to improve the water solubility, the poorly water-soluble agrochemical active compound is dispersed in the solid medium in an amorphous state or in a semi-amorphous state.

Whether or not the poorly water-soluble agrochemical active compound is dispersed in an amorphous state or in a semi-amorphous state is determined according to (i) to (iv) below.

(i) The powder X-ray diffraction of a composition (a composition in which a poorly water-soluble agrochemical active compound is dispersed in a solid medium) is measured.
(ii) The poorly water-soluble agrochemical active compound and the solid medium both in a solid state are mixed at the same mass ratio as in the above composition. The powder X-ray diffraction of the resulting mixture (a physically mixed sample) is measured. In the physically mixed sample, a diffraction peak derived from the crystal of the poorly water-soluble agrochemical active compound and/or a diffraction peak derived from the crystal of the solid medium is observed.
(iii) The measurement result of the above composition and the measurement result of the physically mixed sample are compared.
(iv) When the diffraction peak derived from the crystal observed in the measurement result of the physically mixed sample is not observed in the measurement result of the above composition, or when the area of the diffraction peak observed in the measurement result of the above composition is smaller than the area of the diffraction peak observed in the measurement result of the physically mixed sample, the poorly water-soluble agrochemical active compound is determined as being dispersed in the solid medium in an amorphous or semi-amorphous state.

The powder X-ray diffraction can be measured with, for example, an X'Pert PRO MPD (manufactured by Spectris Co., Ltd.) under the following conditions.
- Target: Cu
- X-ray tube current: 40 mA
- X-ray tube voltage: 45 kV
- Scan range: 2θ = 4.0-40.0°

### (Poorly water soluble agrochemical active compound)

In this specification, the poorly water-soluble agrochemical active compound refers to an agrochemical active compound that has a water solubility of less than 200 ppm at 25°C. Examples of the agrochemical active compound include insecticides, fungicides, and herbicides.

Examples of insecticides as poorly water-soluble agrochemical active compounds include carbamate compounds such as XMC, carbaryl, phenoxycarb, and alanycarb; organophosphorous compounds such as phenthoate, tetrachlorvinphos, dimethylvinphos, phosalone, chlorpyrifos, chlorpyrifos-methyl, pyridaphenthion, quinalphos, azinphos-ethyl, azinephos-methyl, and salithion; and buprofezin, thiocyclam, bensultap, phenoxycarb, fenazaquin, fenpyroximate, pyridaben, hydramethylnon, thiodicarb, chlorphenapyl, fenproximate, pyrimidifen, tebufenozide, tebufenpyrad, indoxacarb MP, sulfluramid, milbemectin, and avermectin; oxazoline compounds such as etoxazole; and benzoxazole compounds such as 2-[3-(ethanesulfonyl)pyridin-2-yl]-5-(trifluoromethanesulfonyl)benzoxazole.

Examples of fungicides as poorly water-soluble agrochemical active compounds include benzimidazole compounds such as benomyl, carbendazim, thiabendazole, and thiophanate-methyl; phenylcarbamate compounds such as diethofencarb; dicarboxyimide compounds such as procymidone, iprodione, and vincrozoline; azole compounds such as diniconazol, epoxyconazole, tebuconazole, difenoconazole, cyproconazole, flusilazole, and simeconazole; acylalanine compounds; carboxamide compounds such as mepronil, flutolanil, thifluzamide, ethaboxam, N-(1,1,3-trimethylindan-4-yl)-1-methyl-3-difluoromethylpyrazole-4-carboxylic acid amide (such as a 98:2 mixture of the R enantiomer and the S enantiomer of N-(1,1,3-trimethylindan-4-yl)-1-methyl-3-difluoromethylpyrazole-4-carboxylic acid amide); organophosphorous compounds such as tolclofos-methyl and pyrazophos; anilinopyrimidine compounds such as pyrimethanil, mepanipyrim, and cyprodinil; phenylpyrrole compounds such as fludioxonil; and chlorothalonil, acibenzolar-S-methyl, isoprothiolane, dichlomedin, pencycuron, fluoroimide, dithianon, chinomethionate, diflumetorim, triazine, iminoctadine albesil acetate, cyazofamid, fenhexamid, cyflufenamid, tiadinil, manzeb, captan, folpet, probenazole, fthalide, dimethomorph, famoxadone, oxolinic acid, fluazinam, ferimzone, and diclocymet; and strobilurin compounds such as 1-[2-({[1-(4-chlorophenyl)-1H-pyrazol-3-yl]oxy}methyl)-3-methylphenyl]-4-methyl-5-oxo-4,5-dihydro-1H-tetrazole.

Examples of herbicides as poorly water-soluble agrochemical active compounds include triazine compounds such as simazine, atrazine, prometryn, dimethametryn, and triaziflam; urea compounds such as isoproturon; nitrile compounds such as ioxynil; dinitroaniline compounds such as trifluralin, prodiamine, pendimethalin, and oryzalin; aromatic carboxylic acid compounds such as imazaquin, dithiopyr, and fentrazamide; sulfonylurea compounds such as bensulfuron-methyl, ethoxysulfuron, pyrazosulfuron-ethyl, azimsulfuron, halosulfuronmethyl, flazasulfron, cinosulfuron, nicosulfuron, rimsulfuron, imazosulfuron, metsulfuron-methyl, cyclosulfamuron, and triflusulfuron-methyl; N-phenylphthalimide compounds such as flumioxazin, cinidon-ethyl, and flumiclorac-pentyl; and sulfentrazone, flumetsulam, fenoxaprop-p-ethyl, cyhalofop-butyl, diflufenican, norflurazon, isoxaflutole, and mefenacet. Here, specific examples of the above carboxylic acid compounds include compounds having a carboxy group and compounds having a carbonyl group.

One of the above poorly water-soluble agrochemical active compounds may be used singly, or two or more may be used in combination. The poorly water-soluble agrochemical active compound may be, for example, flumioxazin, N-(1,1,3-trimethylindan-4-yl)-1-methyl-3-difluoromethylpyrazole-4-carboxylic acid amide, 1-[2-({[1-(4-chlorophenyl)-1H-pyrazol-3-yl]oxy}methyl)-3-methylphenyl]-4-methyl-5-oxo-4,5-dihydro-1H-tetrazole, ethaboxam, or 2-[3-(ethanesulfonyl)pyridin-2-yl]-5-(trifluoromethanesulfonyl)benzoxazole.

The 98:2 mixture of the R enantiomer and the S enantiomer of N-(1,1,3-trimethylindan-4-yl)-1-methyl-3-difluoromethylpyrazole-4-carboxylic acid amide has a water solubility of about 20 ppm at 25°C, ethaboxam has a water solubility of about 5 ppm at 25°C, flumioxazin has a water solubility of about 2 ppm at 25°C, 2-[3-(ethanesulfonyl)pyridin-2-yl]-5-(trifluoromethanesulfonyl)benzoxazole has a water solubility of about 6 ppm at 25°C, and 1-[2-({[1-(4-chlorophenyl)-1H-pyrazol-3-yl]oxy}methyl)-3-methylphenyl]-4-methyl-5-oxo-4,5-dihydro-1H-tetrazole has a water solubility of about 0.03 ppm at 25°C.

### (Solid medium)

As described above, the solid medium comprises a saponification product of polyvinyl acetate comprising at least one selected from the group consisting of a sulfonic acid group and a sulfonate group (hereinafter sometimes referred to as "a saponification product of sulfonic acid-modified polyvinyl acetate"). Specific examples of a sulfonic acid group and a sulfonate group include groups represented by formula (I). That is to say, the saponification product of sulfonic acid-modified polyvinyl acetate may be, for example, a saponification product of polyvinyl acetate containing a group represented by formula (I).

-SO₃X ... (I)

In formula (I), X represents a hydrogen atom or a monovalent cation. Examples of the monovalent cation include alkali metal ions and ammonium ions. Examples of alkali metal ions include sodium ion and potassium ion.

The sulfonic acid group and/or the sulfonate group according to the present embodiment may be contained in the form of a free acid.

From the viewpoint that the ability to improve the water solubility of a poorly water-soluble agrochemical active compound is further improved, the saponification product of sulfonic acid-modified polyvinyl acetate may be, for example, a saponification product of polyvinyl acetate containing a sulfonic acid group (-SO₃H), -SO₃Na, - SO₃K, or -SO₃NH₄.

The saponification product of sulfonic acid-modified polyvinyl acetate is, for example, a polymeric compound containing a structural unit derived from a polymerization monomer containing at least one selected from the group consisting of a sulfonic acid group and a sulfonate group and a structural unit represented by formula (II) (a vinyl alcohol structure).

-CH₂-CH(OH)- ... (II)

Specific examples of the saponification product of sulfonic acid-modified polyvinyl acetate include those in which a structure derived from a polymerization monomer containing at least one selected from the group consisting of a sulfonic acid group and a sulfonate group is incorporated in a polyvinyl alcohol skeleton. The saponification product of sulfonic acid-modified polyvinyl acetate may contain a structural unit represented by formula (III) (a vinyl acetate structure).

-CH₂-CH(OCOCH₃)- ... (III)

From the viewpoint that the ability to improve the water solubility of a poorly water-soluble agrochemical active compound is further improved, the degree of saponification of the saponification product of sulfonic acid-modified polyvinyl acetate may be, for example, 10 mol% or more, 20 mol% or more, or 30 mol% or more. From the same viewpoint, the degree of saponification of the saponification product of sulfonic acid-modified polyvinyl acetate may be, for example, 100 mol% or less, 80 mol% or less, or 70 mol% or less. From these viewpoints, the degree of saponification of the saponification product of sulfonic acid-modified polyvinyl acetate, for example, may be 10 to 100 mol%, may be 20 to 80 mol%, may be 30 to 100 mol%, or may be 30 to 70 mol%.

When the poorly water-soluble agrochemical active compound is N-(1,1,3-trimethylindan-4-yl)-1-methyl-3-difluoromethylpyrazole-4-carboxylic acid amide, the degree of saponification of the saponification product, for example, may be 20 mol% or more and may be 100 mol% or less from the viewpoint that the water solubility is maintained for a long period of time. From these viewpoints, the degree of saponification of the saponification product, for example, may be 20 to 100 mol%.

Here, the degree of saponification is the molar content of the structural unit represented by formula (II) relative to the total of the structural unit represented by formula (II) and the structural unit represented by formula (III). In this specification, the degree of saponification is indicated by a value obtained in accordance with JIS K 6726-1994.

The degree of polymerization of the saponification product of sulfonic acid-modified polyvinyl acetate, for example, may be 50 or more, and may be 1000 or less, 700 or less, or 500 or less. From these viewpoints, the degree of polymerization of the saponification product of sulfonic acid-modified polyvinyl acetate, for example, may be 50 to 1000, may be 50 to 700, or may be 50 to 500.

Here, in this specification, the degree of polymerization of the saponification product of sulfonic acid-modified polyvinyl acetate is indicated by a value obtained in accordance with JIS K 6726-1994.

The saponification product of sulfonic acid-modified polyvinyl acetate can be produced by, for example, a method in which a copolymer obtained by copolymerizing olefinsulfonic acid or a salt thereof with a vinyl ester such as vinyl acetate is further saponified.

Examples of the olefinsulfonic acid include ethylenesulfonic acid, allylsulfonic acid, methallylsulfonic acid, sulfoalkyl malate, sulfoalkyl (meth)acrylamide, and sulfoalkyl (meth)acrylate.

A solvent can also be used for the copolymerization reaction. Examples of the solvent include alcohol and a mixed solvent of alcohol and water.

Specific examples of the olefinsulfonic acid or salt thereof include compounds represented by formulae (1) to (5).

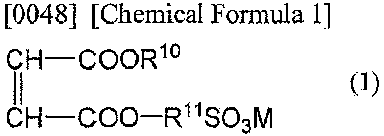

In formula (1), R¹⁰ represents an alkyl group, R¹¹ represents an alkylene group, and M represents a hydrogen atom, an alkali metal ion, or an ammonium ion.

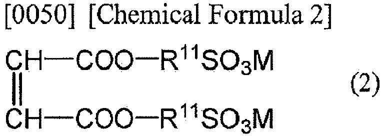

R¹¹ and M in formula (2) are as defined above.

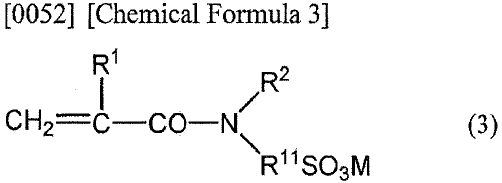

In formula (3), R¹ represents hydrogen or a methyl group, and R² represents hydrogen or an alkyl group. R¹¹ and M are as defined above.

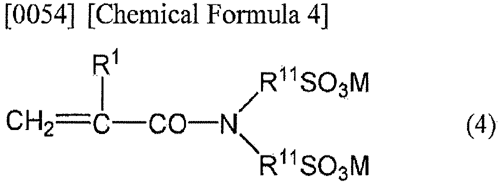

R¹, R¹¹, and M in formula (4) are as defined above.

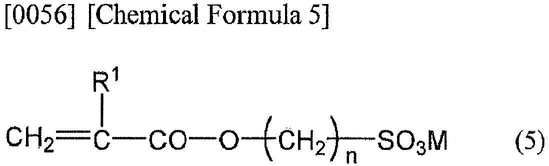

In formula (5), n represents an integer of 1 to 8. R¹ and M are as defined above.

Specific examples of compounds represented by formula (1) or (2) include sodium sulfopropyl 2-ethylhexyl malate, sodium sulfopropyl tridecyl malate, and sodium sulfopropyl eicosyl malate.

Specific examples of compounds represented by formula (3) or (4) include N-sulfoisobutylene acrylamide sodium salts.

Specific examples of compounds represented by formula (5) include sodium 2-sulfoethylacrylate.

In the saponification product of sulfonic acid-modified polyvinyl acetate, the total number of moles of monomers having a sulfonic acid group and a sulfonate group based on the number of moles of all monomers constituting the saponification product, for example, may be 0.1 mol% or more or 1 mol% or more, and may be 30 mol% or less, 20 mol% or less, or 10 mol% or less. From these viewpoints, the total number of moles of monomers having a sulfonic acid group and a sulfonate group based on the number of moles of all monomers constituting the saponification product, for example, may be 0.1 to 30 mol%, may be 0.1 to 20 mol%, or may be 1 to 10 mol%.

A commercially available product may be used as the saponification product of sulfonic acid-modified polyvinyl acetate. Examples of commercially available saponification products of sulfonic acid-modified polyvinyl acetate include Gohsenx L-823 (degree of saponification: 43.5 to 49.5 mol%, manufactured by Nippon Synthetic Chemical Industry Co., Ltd.), Gohsenx CKS-50 (degree of saponification: 99 mol% or more, manufactured by Nippon Synthetic Chemical Industry Co., Ltd.), Gohsenx L-3266 (degree of saponification: 86.5 to 89.0 mol%, manufactured by Nippon Synthetic Chemical Industry Co., Ltd.), and ASP-05A (degree of saponification: 88.1 mol%, manufactured by Japan Vam & Poval Co., Ltd.).

The solid medium may contain a compound other than the saponification product of sulfonic acid-modified polyvinyl acetate as long as the effects of the present invention are not impaired. Examples of such compounds include polyethylene glycol (PEG), polyvinylpyrrolidone (PVP), hydroxypropylcellulose (HPC), hydroxypropylmethylcellulose (HPMC), hydroxypropylcellulose acetate succinate (HPMCAS), polyvinyl alcohol (PVA), a copolymer of vinyl acetate and 1-vinyl-2-pyrrolidone (4:6), and a copolymer of polyvinylcaprolactam and polyvinyl acetate and polyethylene glycol.

The content of the saponification product of sulfonic acid-modified polyvinyl acetate in the solid medium, for example, may be 40 mass% or more, 60 mass% or more, or 80 mass% or more, and may be 100 mass% or less, based on the total mass of the solid medium. From these viewpoints, the content of the saponification product, for example, may be 40 to 100 mass%, may be 60 to 100 mass%, or may be 80 to 100 mass%, based on the total mass of the solid medium.

The content of the saponification product of sulfonic acid-modified polyvinyl acetate in the above composition, for example, may be 30 mass% or more, 50 mass% or more, or 70 mass% or more, and may be 90 mass% or less, based on the total mass of the composition. From these viewpoints, the content of the saponification product, for example, may be 30 to 90 mass%, may be 50 to 90 mass%, or may be 70 to 90 mass%, based on the total mass of the composition.

In the above composition, from the viewpoint that the ability to improve the water solubility of a poorly water-soluble agrochemical active compound is further improved, the ratio of (the mass of the poorly water-soluble agrochemical active compound) / (the mass of the saponification product of sulfonic acid-modified polyvinyl acetate), for example, may be 1/15 or more or 1/9 or more, and may be 7/3 or less, 1/1 or less, or 2/3 or less. From these viewpoints, the ratio of (the mass of the poorly water-soluble agrochemical active compound) / (the mass of the saponification product of sulfonic acid-modified polyvinyl acetate) in the above composition, for example, may be 1/15 to 7/3, may be 1/9 to 1/1, or may be 1/9 to 2/3. That is to say, from the viewpoint that the ability to improve the water solubility of a poorly water-soluble agrochemical active compound is further improved, the mass ratio of the poorly water-soluble agrochemical active compound to the saponification product of sulfonic acid-modified polyvinyl acetate in the above composition, for example, may be 7:3 to 1:15, may be 1:1 to 1:9, or may be 2:3 to 1:9.

### (Method for producing the above composition)

The composition according to the present embodiment (a composition comprising a poorly water-soluble agrochemical active compound and a solid medium comprising a saponification product of polyvinyl acetate comprising at least one selected from the group consisting of a sulfonic acid group and a sulfonate group, wherein the poorly water-soluble agrochemical active compound is dispersed in the solid medium) may be produced by, for example, a spray drying method, a melt extrusion method, or an ultrasonic compression method from the viewpoint of ease of production.

The spray drying method is a method including, for example, (A-1) a step of dissolving a poorly water-soluble agrochemical active compound and a solid medium comprising a saponification product of sulfonic acid-modified polyvinyl acetate in an organic solvent to prepare a solution, and (A-2) a step of spray-drying the solution.

Step (A-1) may be performed, for example, at ordinary temperature or under heating.

The organic solvent used in step (A-1) is not particularly limited as long as it has the ability to sufficiently dissolve the agrochemical active compound and the saponification product of sulfonic acid-modified polyvinyl acetate, and, for example, an organic solvent having a boiling point of 100°C or lower is preferable. From the safety viewpoint, the organic solvent may be a ketone or an alcohol, or may be acetone, ethanol, or a mixed solvent thereof.

Step (A-2) is performed at, for example, a temperature equal to or higher than the boiling point of the organic solvent.

For example, a spray dryer can be used for step (A-2). Examples of the spray dryer include Mini Spray Dryer B-290 manufactured by Buchi and Spray Dryer CL-8i manufactured by Ohkawara Kakohki Co., Ltd.

The melt extrusion method is a method including, for example, (B-1) a step of mixing a poorly water-soluble agrochemical active compound and a solid medium comprising a saponification product of sulfonic acid-modified polyvinyl acetate to obtain a mixture, and (B-2) a step of granulating the mixture by melt extrusion.

In step (B-1), it is preferable to uniformly mix the poorly water-soluble agrochemical active compound and the solid medium.

Step (B-2) is performed while heating the mixture to, for example, a temperature equal to or higher than the Tg of the solid medium or a temperature equal to or higher than the melting point of the poorly water-soluble agrochemical active compound.

For example, a granulator can be used for step (B-2). An example of such a granulator is Mini Extruder ZE-9 manufactured by Three Tec.

The melt extrusion method may further include a step of cooling the granules obtained in step (B-2) to ordinary temperature (step (B-3)). Moreover, the granules may be sorted, pulverized, or crushed before or after step (B-3) as necessary.

The ultrasonic compression method is a method including, for example, (C-1) a step of mixing a poorly water-soluble agrochemical active compound with a solid medium comprising the saponification product of sulfonic acid-modified polyvinyl acetate to obtain a mixture, and (C-2) a step of charging the mixture obtained in the above step into the mortar of an ultrasonic tablet press to compress the mixture while irradiating it with ultrasonic waves.

In step (C-1), it is preferable to uniformly mix the poorly water-soluble agrochemical active compound and the solid medium.

An example of the ultrasonic tablet press used in step (C-2) may be an ultrasonic molding machine USTM/L20 manufactured by Tecnea Engineering. In this step, the energy of ultrasonication may be 600 to 2000 J, may be 700 to 1800 J, or may be 800 to 1300 J.

In the methods for producing a composition according to the present embodiment, specific examples and preferable forms of the poorly water-soluble agrochemical active compound and the solid medium comprising the saponification product of sulfonic acid-modified polyvinyl acetate are the same as those in the embodiment of the composition. Moreover, the mass ratio of the poorly water-soluble agrochemical active compound to the solid medium and the mass ratio of the poorly water-soluble agrochemical active compound to the saponification product in the composition can be adjusted by, for example, adjusting the blending proportions of these in steps (A-1), (B-1), and (C-1).

### (Agrochemical composition)

The composition according to the above-described embodiment can also be formed into an agrochemical composition by, for example, adding additional components such as a formulation auxiliary.

The agrochemical composition according to one embodiment contains a composition according to the above-described embodiment. Such an agrochemical composition has a remarkable ability to improve the water solubility of a poorly water-soluble agrochemical active compound.

The agrochemical composition may contain at least one formulation auxiliary.

Examples of the formulation auxiliary include surfactants, solid carriers, and binders.

Examples of the surfactants include nonionic surfactants, cationic surfactants, and anionic surfactants.

Examples of nonionic surfactants include acrylic acid copolymers such as acrylic acid graft copolymers, polyoxyethylene alkyl ethers, polyoxyethylene alkylaryl ethers, polyoxyethylene lanolin alcohols, condensates of polyoxyethylene alkylphenol and formaldehyde (polyoxyethylene alkylphenol formalin condensates), polyoxyethylene sorbitan fatty acid esters, polyoxyethylene glyceryl monofatty acid esters, polypropylene glycol monofatty acid esters, polyoxyethylene sorbitol fatty acid esters, sorbitan fatty acid esters, polyoxyethylene castor oils, polyoxyethylene fatty acid esters, higher fatty acid glycerine esters, sucrose fatty acid esters, polyoxyethylene polyoxypropylene block polymers, polyoxyethylene fatty acid amides, and polyoxyethylene alkylamines.

Examples of cationic surfactants include alkylamine hydrochlorides such as dodecylamine hydrochloride; alkyl trimethyl quaternary ammonium salts such as alkyl quaternary ammonium salts and dodecyl trimethyl ammonium salts; and alkyl dimethyl benzyl ammonium salts, alkylpyridinium salts, alkylisoquinolinium salts, dialkylmorpholinium salts, benzethonium chloride, and polyalkylvinylpyridinium salts.

Examples of anionic surfactants include lignosulfonates such as sodium lignosulfonate; salts of condensates of arylsulfonic acid and formaldehyde (hereinafter sometimes referred to as "salts of arylsulfonic acid formalin condensates") such as sodium salts of condensates of naphthalenesulfonic acid and formaldehyde (naphthalenesulfonic acid formalin condensate sodium salts); salts of condensates of alkylarylsulfonic acid and formaldehyde (hereinafter sometimes referred to as "salts of alkylarylsulfonic acid formalin condensates") such as sodium salts of condensates of methylnaphthalenesulfonic acid and formaldehyde (methylnaphthalenesulfonic acid formalin condensate sodium salts or methylnaphthalenesulfonic acid formalin polycondensate sodium salts); salts of condensates of arylsulfonic acid and alkylarylsulfonic acid and formaldehyde (hereinafter sometimes referred to as "salts of formalin condensates of arylsulfonic acid and alkylarylsulfonic acid") such as sodium salts of condensates of naphthalenesulfonic acid and butylnaphthalenesulfonic acid and formaldehyde (naphthalenenesulfonic acid butylnaphthalenesulfonic acid formalin condensate sodium salts); sodium salts of fatty acids such as sodium palmitate; sodium ether carboxylates such as sodium polyoxyethylene lauryl ether carboxylates; salts of amino acid condensates of higher fatty acids such as sodium lauroyl sarcosine and sodium N-lauroylglutamate; higher alkylsulfonates; higher fatty acid ester sulfonates such as lauric acid ester sulfonates; dialkylsulfosuccinates such as sodium dioctylsulfosuccinate; higher fatty acid amide sulfonates such as oleamide sulfonates; alkylarylsulfonates such as dodecylbenzenesulfonates and diisopropylnaphthalenesulfonates; alkenylsulfonates; higher alcohol sulfate salts such as sodium lauryl sulfate and pentadecane-2-sulfate salts; polyoxyethylene alkyl ether sulfate salts such as sodium polyoxyethylene dodecyl ether sulfate; and polyoxyethylene alkylphosphate salts such as dipolyoxyethylene dodecyl ether phosphate salts.

One of the above surfactants may be used singly, or two or more may be used in combination.

When the agrochemical composition contains a surfactant, the total content of the surfactant, for example, may be 0.1 mass% or more, 0.5 mass% or more, or 1 mass% or more, and may be 50 mass% or less, 30 mass% or less, 20 mass% or less, or 10 mass% or less, based on the total mass of the agrochemical composition. From these viewpoints, the total content of the surfactant, for example, may be 0.1 to 50 mass%, may be 0.1 to 30 mass%, may be 0.5 to 20 mass%, or may be 1 to 10 mass%, based on the total mass of the agrochemical composition.

Examples of the solid carrier include water-soluble carriers and non-water-soluble carriers. Examples of water-soluble carriers include organic or inorganic acid salts such as ammonium sulfate, ammonium bicarbonate, ammonium nitrate, ammonium chloride, potassium chloride, sodium sulfate, magnesium sulfate, sodium citrate, sodium carbonate, and sodium hydrogencarbonate, organic acids such as citric acid and succinic acid, sugars such as sucrose and lactose, and urea. Examples of non-water-soluble carriers include clay such as kaolin clay, calcium carbonate, montmorillonite, diatomaceous earth, zeolite, attapulgite, gypsum, pottery stone, pumice, wood flour, pearlite, volcanic sand, and white carbon. One of the solid carriers may be used singly, or two or more may be used in combination.

When the agrochemical composition contains a solid carrier, the total content of the solid carrier, for example, may be 0.1 mass% or more, 0.5 mass% or more, or 1 mass% or more, and may be 90 mass% or less, 60 mass% or less, or 30 mass% or less, based on the total mass of the agrochemical composition. From these viewpoints, the total content of the solid carrier, for example, may be 0.1 to 90 mass%, may be 0.5 to 60 mass%, or may be 1 to 30 mass%, based on the total mass of the agrochemical composition.

Examples of the binders include sodium carboxymethylcellulose, methylcellulose, methylethylcellulose, tragacanth gum, pregelatinized starch, dextrin, alginic acid, and sodium alginate. One of the binders may be used singly, or two or more may be used in combination.

When the agrochemical composition contains a binder, the total content of the binder, for example, may be 0.5 mass% or more, 1 mass% or more, or 2 mass% or more, and may be 10 mass% or less, 5 mass% or less, or 4 mass% or less, based on the total mass of the agrochemical composition. From these viewpoints, the total content of the binder, for example, may be 0.5 to 10 mass%, may be 1 to 5 mass%, or may be 2 to 4 mass%, based on the total mass of the agrochemical composition.

The agrochemical composition may contain an aromatic sulfonic acid type polymeric surfactant from the viewpoint that the water solubility of the poorly water-soluble agrochemical active compound is maintained at a high level for a longer period of time. That is to say, the agrochemical composition according to the present embodiment may contain the composition according to the present embodiment and an aromatic sulfonic acid type polymeric surfactant. With such an agrochemical composition, the water solubility of the poorly water-soluble agrochemical active compound can be maintained at a high level for a longer period of time. In the agrochemical composition, the poorly water-soluble agrochemical active compound is not particularly limited and may be, for example, flumioxazin, or 1-[2-({[1-(4-chlorophenyl)-1H-pyrazol-3-yl]oxy}methyl)-3-methylphenyl]-4-methyl-5-oxo-4,5-dihydro-1H-tetrazole.

Examples of the aromatic sulfonic acid type polymeric surfactant include lignosulfonates, salts of alkylarylsulfonic acid formalin condensates, salts of arylsulfonic acid formalin condensates, and salts of formalin condensates of arylsulfonic acid and alkylarylsulfonic acid. From the viewpoint that the water solubility of a poorly water-soluble agrochemical active compound is maintained at a high level for a yet longer period of time, the aromatic sulfonic acid type polymeric surfactant may be at least one selected from the group consisting of lignosulfonates, salts of alkylarylsulfonic acid formalin condensates, salts of arylsulfonic acid formalin condensates, and salts of formalin condensates of arylsulfonic acid and alkylarylsulfonic acid.

When the agrochemical composition contains a poorly water-soluble agrochemical active compound and an aromatic sulfonic acid type polymeric surfactant, the mass ratio of the poorly water-soluble agrochemical active compound to the aromatic sulfonic acid type polymeric surfactant may be 2:1 to 1:10, may be 1:1 to 1:10, or may be 1:5 to 1:10 from the viewpoint that the water solubility of the poorly water-soluble agrochemical active compound is maintained at a high level for a yet longer period of time. That is to say, in the agrochemical composition, the ratio of (the mass of the poorly water-soluble agrochemical active compound) / (the mass of the aromatic sulfonic acid type polymeric surfactant) may be 2/1 to 1/10, may be 1/1 to 1/10, or may be 1/5 to 1/10.

Examples of the forms of the agrochemical composition include formulations such as wettable powders, granular wettable powders, and granules.

### (Method for producing agrochemical composition)

The agrochemical composition according to the present embodiment can be produced by, for example, mixing the composition of the above-described embodiment with formulation auxiliaries such as a surfactant, a solid carrier, and a binder, and performing processing such as crushing, granulation, and drying as necessary. More specifically, a wettable powder, a granular wettable powder, and a granule can be produced by the following production methods.

### (1) Wettable powder

The composition according to the above-described embodiment, a surfactant, a solid carrier are mixed, and crushed by a dry mill such as a jet mill.

### (2) Granular wettable powder

The composition according to the above-described embodiment is mixed with a surfactant, a binder, and a solid carrier as necessary, and the resulting mixture is crushed as necessary. Thereafter, water is added for kneading, and then extrusion granulation is performed. Then, the resulting particles are dried and, as necessary, pulverized, sorted, and sifted.

### (3) Granule

The composition according to the above-described embodiment is mixed with a surfactant, a binder, and a solid carrier as necessary, and the resulting mixture is crushed as necessary. Thereafter, water is added for kneading, and then extrusion granulation is performed. Then, the resulting particles are dried and, as necessary, pulverized, sorted, and sifted.

### Examples

Below, the present invention is described in more detail by way of Examples and Comparative Examples. However, the present invention is not limited to the following Examples.

Solid dispersions (powders A to J) as compositions according to the present embodiment, solid dispersions (comparative powders K and L) according to Comparative Examples, and a powder (comparative powders M to S), which is a physically mixed sample, were prepared as follows.

### Production Example 1 (Powder A)

Flumioxazin in an amount of 10.0 parts by mass and Gohsenx L-823 (a saponification product of sulfonic acid-modified polyvinyl acetate, manufactured by Nippon Synthetic Chemical Industry Co., Ltd.) in an amount of 90.0 parts by mass were mixed, and granulated by melt extrusion with a Mini Extruder (manufactured by Three Tec, model ZE-9) at the barrel temperatures of 50°C, 140°C, and 190°C in order of closeness to the powder inlet. After being cooled to room temperature, the resulting granules were crushed with a mill (manufactured by Nara Machinery Co., Ltd., model DM-6), thus giving powder A (a solid dispersion), which is a composition according to the present embodiment.

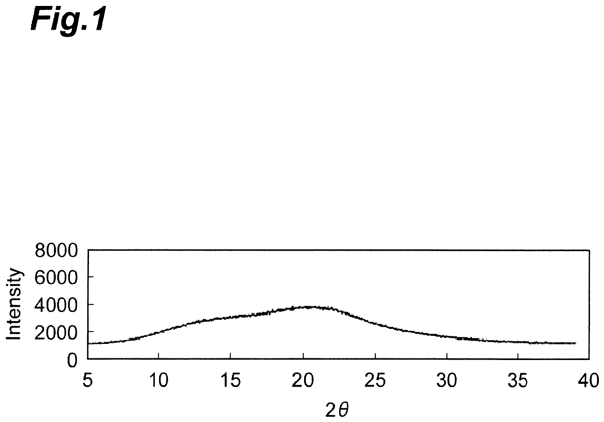

As a result of performing powder X-ray diffraction measurement on powder A, a peak derived from the crystal of flumioxazin was not recognized (Fig. 1).

### Production Example 2 (Powder B)

A 98:2 mixture of the R enantiomer and the S enantiomer of N-(1,1,3-trimethylindan-4-yl)-1-methyl-3-difluoromethylpyrazole-4-carboxylic acid amide (hereinafter referred to as agrochemical active compound A) in an amount of 10.0 parts by mass and Gohsenx L-823 (a saponification product of sulfonic acid-modified polyvinyl acetate, manufactured by Nippon Synthetic Chemical Industry Co., Ltd.) in an amount of 90.0 parts by mass were mixed, and granulated by melt extrusion with a Mini Extruder (manufactured by Three Tec, model ZE-9) at the barrel temperatures of 50°C, 130°C, and 150°C in order of closeness to the powder inlet. After being cooled to room temperature, the resulting granules were crushed with a mill (manufactured by Nara Machinery Co., Ltd., model DM-6), thus giving powder B (a solid dispersion), which is a composition according to the present embodiment.

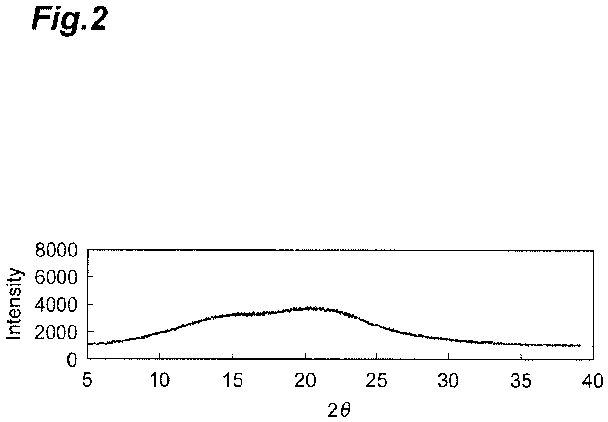

As a result of performing powder X-ray diffraction measurement on powder B, a peak derived from the crystal of agrochemical active compound A was not recognized (Fig. 2).

### Production Example 3 (Powder C)

Agrochemical active compound A in an amount of 30.0 parts by mass and Gohsenx L-823 (a saponification product of sulfonic acid-modified polyvinyl acetate, manufactured by Nippon Synthetic Chemical Industry Co., Ltd.) in an amount of 70.0 parts by mass were mixed, and granulated by melt extrusion with a Mini Extruder (manufactured by Three Tec, model ZE-9) at the barrel temperatures of 50°C, 130°C, and 150°C in order of closeness to the powder inlet. After being cooled to room temperature, the resulting granules were crushed with a mill (manufactured by Nara Machinery Co., Ltd., model DM-6), thus giving powder C (a solid dispersion), which is a composition according to the present embodiment.

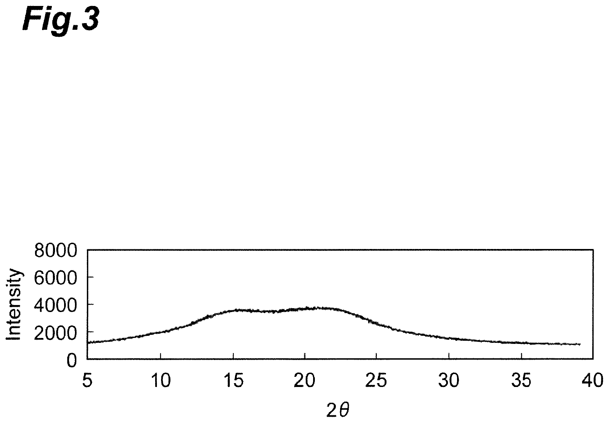

As a result of performing powder X-ray diffraction measurement on powder C, a peak derived from the crystal of agrochemical active compound A was not recognized (Fig. 3).

### Production Example 4 (Powder D)

Agrochemical active compound A in an amount of 10.0 parts by mass and Gohsenx L-3266 (a saponification product of sulfonic acid-modified polyvinyl acetate, manufactured by Nippon Synthetic Chemical Industry Co., Ltd.) in an amount of 90.0 parts by mass were mixed, and granulated by melt extrusion with a Mini Extruder (manufactured by Three Tec, model ZE-9) at the barrel temperatures of 90°C, 150°C, and 200°C in order of closeness to the powder inlet. After being cooled to room temperature, the resulting granules were crushed with a mill (manufactured by Nara Machinery Co., Ltd., SAMF), thus giving powder D (a solid dispersion), which is a composition according to the present embodiment.

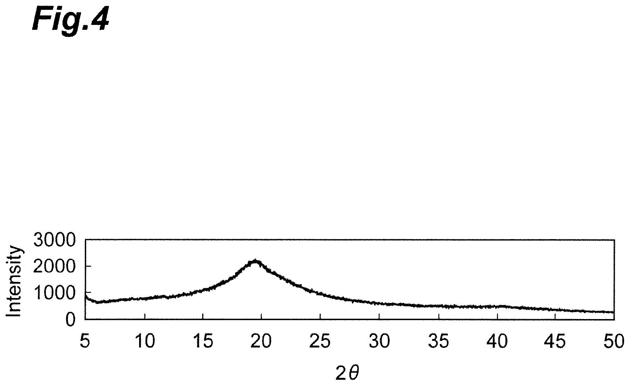

As a result of performing powder X-ray diffraction measurement on powder D, a peak derived from the crystal of agrochemical active compound A was not recognized (Fig. 4).

### Production Example 5 (Powder E)

Agrochemical active compound A in an amount of 10.0 parts by mass and ASP-05 (a saponification product of sulfonic acid-modified polyvinyl acetate, manufactured by Japan Vam & Poval Co., Ltd.) in an amount of 90.0 parts by mass were mixed, and granulated by melt extrusion with a Mini Extruder (manufactured by Three Tec, model ZE-9) at the barrel temperatures of 100°C, 150°C, and 180°C in order of closeness to the powder inlet. After being cooled to room temperature, the resulting granules were crushed with a mill (manufactured by Nara Machinery Co., Ltd., SAMF), thus giving powder E (a solid dispersion), which is a composition according to the present embodiment.

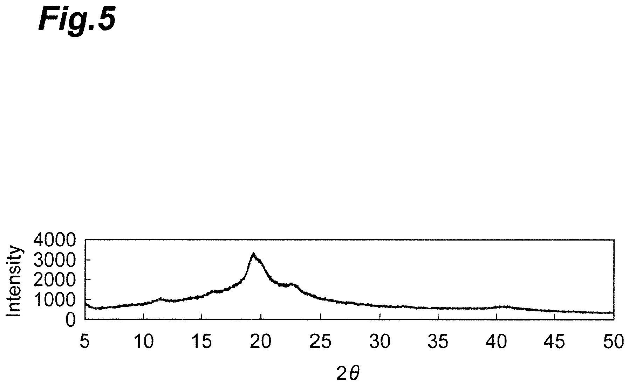

As a result of performing powder X-ray diffraction measurement on powder E, a peak derived from the crystal of agrochemical active compound A was not recognized (Fig. 5).

### Production Example 6 (Powder F)

Ethaboxam in an amount of 20.0 parts by mass and Gohsenx L-823 (a saponification product of sulfonic acid-modified polyvinyl acetate, manufactured by Nippon Synthetic Chemical Industry Co., Ltd.) in an amount of 80.0 parts by mass were dissolved in 900 parts by mass of a mixed solvent of acetone/ethanol (35/65, mass ratio) and spray-dried using a spray dryer (Spray Dryer B-290, manufactured by Buchi) at an inlet temperature of 70 to 85°C at a flow rate of 6 to 9 mL/min, thus giving powder F (a solid dispersion), which is a composition according to the present embodiment.

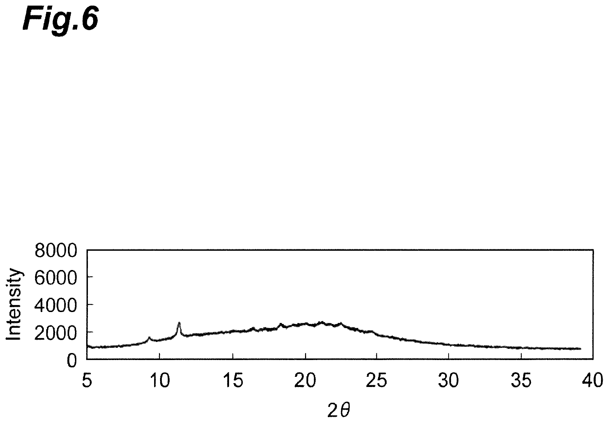

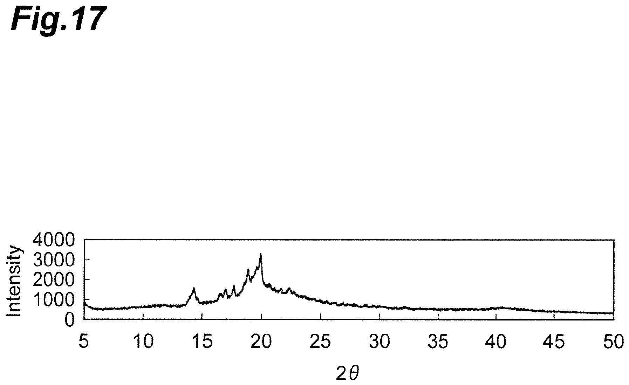

As a result of performing powder X-ray diffraction measurement on powder F, a slight peak derived from the crystal of ethaboxam was recognized (Fig. 6), but the peak intensity was lower than that of comparative powder Q (Fig. 17).

### Production Example 7 (Powder G)

2-[3-(Ethanesulfonyl)pyridin-2-yl]-5-(trifluoromethanesulfonyl)benzoxazole (hereinafter referred to as agrochemical active compound B) in an amount of 10.0 parts by mass and Gohsenx L-823 (a saponification product of sulfonic acid-modified polyvinyl acetate, manufactured by Nippon Synthetic Chemical Industry Co., Ltd.) in an amount of 90.0 parts by mass were mixed, and granulated by melt extrusion with a Mini Extruder (manufactured by Three Tec, model ZE-9) at the barrel temperatures of 50°C, 130°C, and 150°C in order of closeness to the powder inlet. After being cooled to room temperature, the resulting granules were crushed with a mill (manufactured by Nara Machinery Co., Ltd., SAMF), thus giving powder G (a solid dispersion), which is a composition according to the present embodiment.

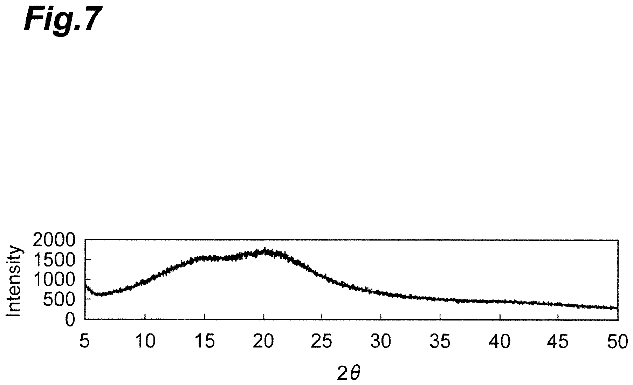

As a result of performing powder X-ray diffraction measurement on powder G, a peak derived from the crystal of agrochemical active compound B was not recognized (Fig. 7).

### Production Example 8 (Powder H)

Agrochemical active compound B in an amount of 10.0 parts by mass and Gohsenx L-3266 (a saponification product of sulfonic acid-modified polyvinyl acetate, manufactured by Nippon Synthetic Chemical Industry Co., Ltd.) in an amount of 90.0 parts by mass were mixed, and granulated by melt extrusion with a Mini Extruder (manufactured by Three Tec, model ZE-9) at the barrel temperatures of 90°C, 130°C, and 200°C in order of closeness to the powder inlet. After being cooled to room temperature, the resulting granules were crushed with a mill (manufactured by Nara Machinery Co., Ltd., SAMF), thus giving powder H (a solid dispersion), which is a composition according to the present embodiment.

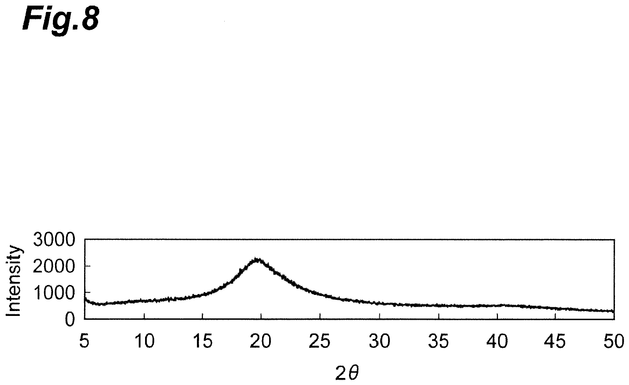

As a result of performing powder X-ray diffraction measurement on powder H, a peak derived from the crystal of agrochemical active compound B was not recognized (Fig. 8).

### Production Example 9 (Powder I)

Agrochemical active compound B in an amount of 10.0 parts by mass and ASP-05 (a saponification product of sulfonic acid-modified polyvinyl acetate, manufactured by Japan Vam & Poval Co., Ltd.) in an amount of 90.0 parts by mass were mixed, and granulated by melt extrusion with a Mini Extruder (manufactured by Three Tec, model ZE-9) at the barrel temperatures of 90°C, 150°C, and 200°C in order of closeness to the powder inlet. After being cooled to room temperature, the resulting granules were crushed with a mill (manufactured by Nara Machinery Co., Ltd., SAMF), thus giving powder I (a solid dispersion), which is a composition according to the present embodiment.

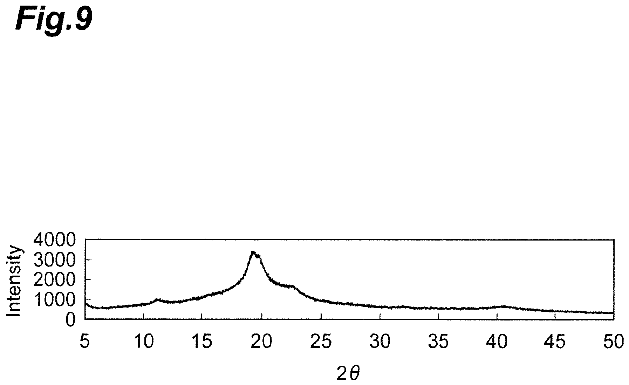

As a result of performing powder X-ray diffraction measurement on powder I, a peak derived from the crystal of agrochemical active compound B was not recognized (Fig. 9).

### Production Example 10 (Powder J)

1-[2-({[1-(4-Chlorophenyl)-1H-pyrazol-3-yl]oxy}methyl)-3-methylphenyl]-4-methyl-5-oxo-4,5-dihydro-1H-tetrazole (hereinafter referred to as agrochemical active compound C) in an amount of 10.0 parts by mass and Gohsenx L-823 (a saponification product of sulfonic acid-modified polyvinyl acetate, manufactured by Nippon Synthetic Chemical Industry Co., Ltd.) in an amount of 90.0 parts by mass were mixed, and granulated by melt extrusion with a Mini Extruder (manufactured by Three Tec, model ZE-9) at the barrel temperatures of 50°C, 130°C, and 150°C in order of closeness to the powder inlet. After being cooled to room temperature, the resulting granules were crushed with a mill (manufactured by Nara Machinery Co., Ltd., SAMF), thus giving powder J (a solid dispersion), which is a composition according to the present embodiment.

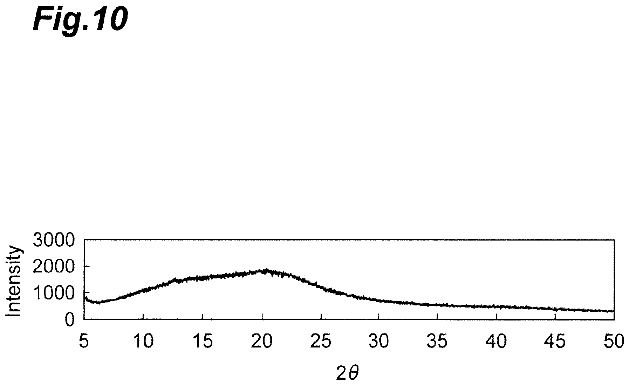

As a result of performing powder X-ray diffraction measurement on powder J, a peak derived from the crystal of agrochemical active compound C was not recognized (Fig. 10).

### Production Example 11 (Comparative Powder K)

Flumioxazin in an amount of 10.0 parts by mass and Gohsenol GL-05S (a saponification product of polyvinyl acetate, manufactured by Nippon Synthetic Chemical Industry Co., Ltd.) in an amount of 90.0 parts by mass were mixed, and granulated by melt extrusion with a Mini Extruder (manufactured by Three Tec, model ZE-9) at the barrel temperatures of 50°C, 140°C, and 190°C in order of closeness to the powder inlet. After being cooled to room temperature, the resulting granules were crushed with a mill (manufactured by Nara Machinery Co., Ltd., model DM-6), thus giving comparative powder K.

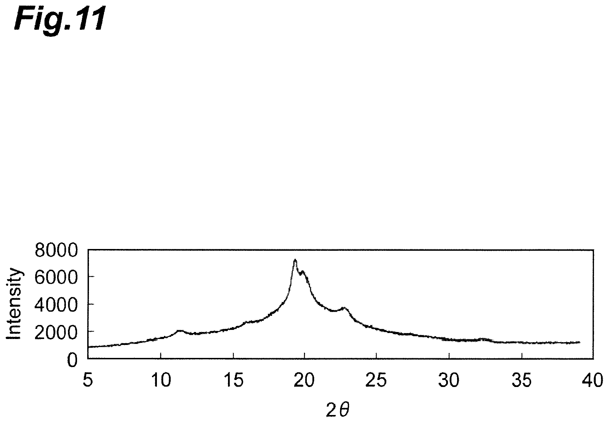

As a result of performing powder X-ray diffraction measurement on powder K, a slight peak derived from the crystal of flumioxazin was recognized (Fig. 11).

### Production Example 12

Flumioxazin in an amount of 10.0 parts by mass and POVACOAT (a polyvinyl alcohol/acrylic acid/methacrylic acid copolymer, manufactured by Daido Chemical Corporation) in an amount of 90.0 parts by mass were mixed, and granulated by melt extrusion with a Mini Extruder (manufactured by Three Tec, model ZE-9) at the barrel temperatures of 50°C, 140°C, and 190°C in order of closeness to the powder inlet, but it was not possible to perform extrusion.

### Production Example 13 (Comparative Powder L)

Agrochemical active compound A in an amount of 10.0 parts by mass and Gohsenol GL-05S (a saponification product of polyvinyl acetate, manufactured by Nippon Synthetic Chemical Industry Co., Ltd.) in an amount of 90.0 parts by mass were mixed, and granulated by melt extrusion with a Mini Extruder (manufactured by Three Tec, model ZE-9) at the barrel temperatures of 50°C, 130°C, and 150°C in order of closeness to the powder inlet. After being cooled to room temperature, the resulting granules were crushed with a mill (manufactured by Nara Machinery Co., Ltd., model DM-6), thus giving comparative powder L.

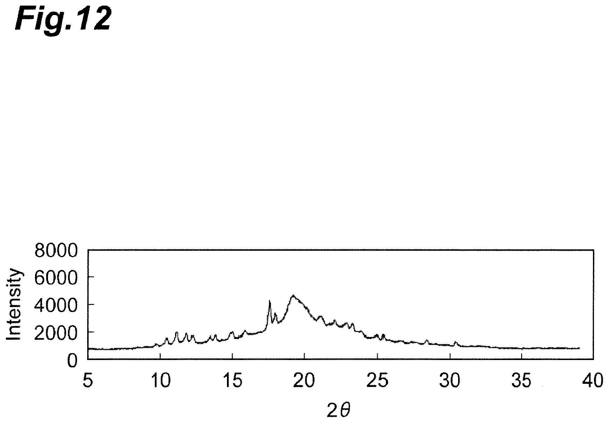

As a result of performing powder X-ray diffraction measurement on powder L, a peak derived from the crystal of agrochemical active compound A was recognized (Fig. 12).

### Production Example 14 (Comparative Powder M (a physically mixed sample))

Agrochemical active compound A in an amount of 10.0 parts by mass and Gohsenx L-3266 (a saponification product of sulfonic acid-modified polyvinyl acetate, manufactured by Nippon Synthetic Chemical Industry Co., Ltd.) in an amount of 90.0 parts by mass were placed in a bag and shaken for mixing, thus giving comparative powder M (a physically mixed sample).

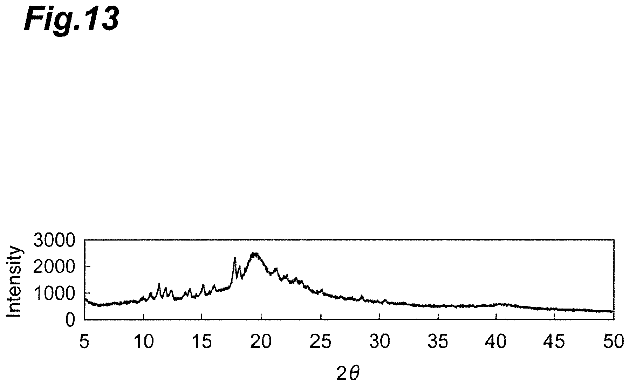

As a result of performing powder X-ray diffraction measurement on powder M, a peak derived from the crystal of agrochemical active compound A was recognized (Fig. 13).

### Production Example 15 (Comparative Powder N (a physically mixed sample))

Agrochemical active compound A in an amount of 10.0 parts by mass and ASP-05 (a saponification product of sulfonic acid-modified polyvinyl acetate, manufactured by Japan Vam & Poval Co., Ltd.) in an amount of 90.0 parts by mass were placed in a bag and shaken for mixing, thus giving comparative powder N (a physically mixed sample).

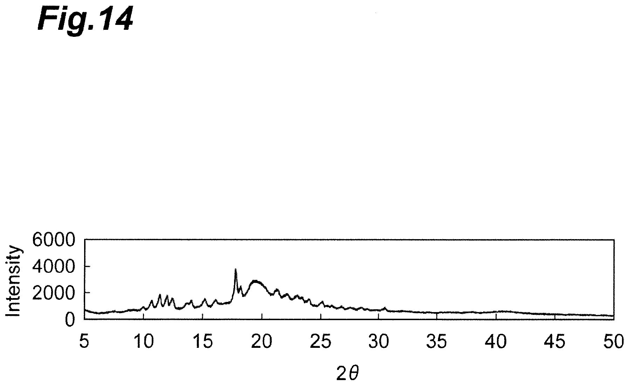

As a result of performing powder X-ray diffraction measurement on powder N, a peak derived from the crystal of agrochemical active compound A was recognized (Fig. 14).

### Production Example 16 (Comparative Powder O (a physically mixed sample))

Ethaboxam in an amount of 20.0 parts by mass and Gohsenx L-823 (a saponification product of sulfonic acid-modified polyvinyl acetate, manufactured by Nippon Synthetic Chemical Industry Co., Ltd.) in an amount of 80.0 parts by mass were placed in a bag and shaken for mixing, thus giving comparative powder O (a physically mixed sample).

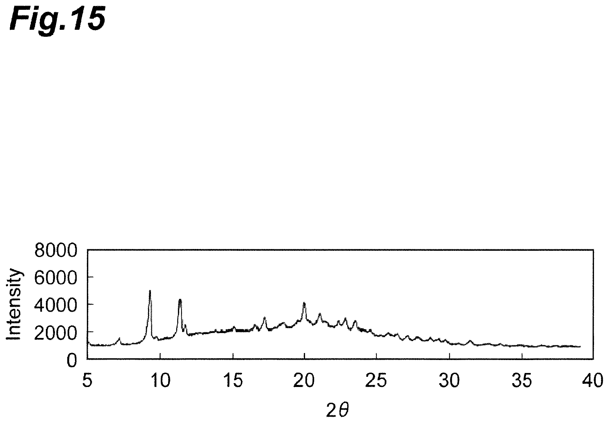

As a result of performing powder X-ray diffraction measurement on powder O, a peak derived from the crystal of ethaboxam was recognized (Fig. 15).

### Production Example 17 (Comparative Powder P (a physically mixed sample))

Agrochemical active compound B in an amount of 10.0 parts by mass and Gohsenx L-823 (a saponification product of sulfonic acid-modified polyvinyl acetate, manufactured by Nippon Synthetic Chemical Industry Co., Ltd.) in an amount of 90.0 parts by mass were placed in a bag and shaken for mixing, thus giving comparative powder P (a physically mixed sample).

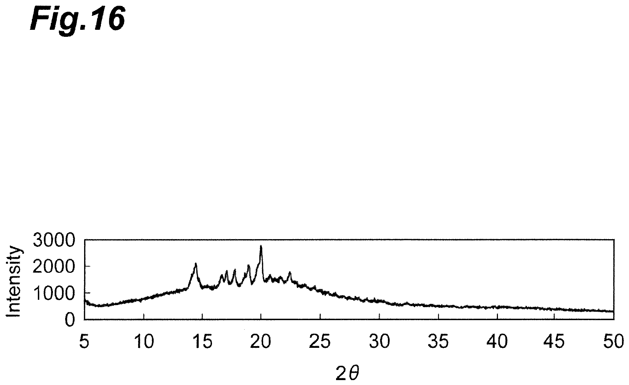

As a result of performing powder X-ray diffraction measurement on powder P, a peak derived from the crystal of agrochemical active compound B was recognized (Fig. 16).

### Production Example 18 (Comparative Powder Q (a physically mixed sample))

Agrochemical active compound B in an amount of 10.0 parts by mass and Gohsenx L-3266 (a saponification product of sulfonic acid-modified polyvinyl acetate, manufactured by Nippon Synthetic Chemical Industry Co., Ltd.) in an amount of 90.0 parts by mass were placed in a bag and shaken for mixing, thus giving comparative powder Q (a physically mixed sample).

As a result of performing powder X-ray diffraction measurement on powder Q, a peak derived from the crystal of agrochemical active compound B was recognized (Fig. 17).

### Production Example 19 (Comparative Powder R (a physically mixed sample))

Agrochemical active compound B in an amount of 10.0 parts by mass and ASP-05 (a saponification product of sulfonic acid-modified polyvinyl acetate, manufactured by Japan Vam & Poval Co., Ltd.) in an amount of 90.0 parts by mass were placed in a bag and shaken for mixing, thus giving comparative powder R (a physically mixed sample).

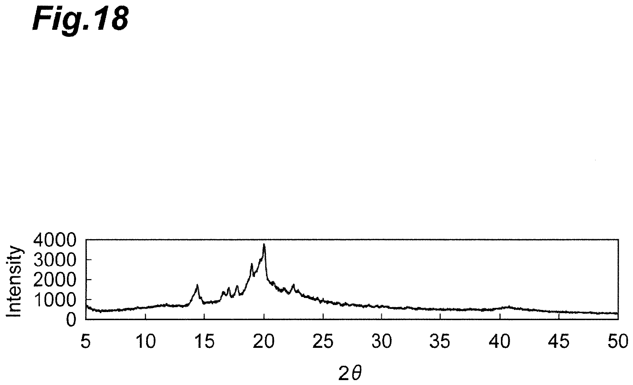

As a result of performing powder X-ray diffraction measurement on powder R, a peak derived from the crystal of agrochemical active compound B was recognized (Fig. 18).

### Production Example 20 (Comparative Powder S (a physically mixed sample))

Agrochemical active compound C in an amount of 10.0 parts by mass and Gohsenx L-823 (a saponification product of sulfonic acid-modified polyvinyl acetate, manufactured by Nippon Synthetic Chemical Industry Co., Ltd.) in an amount of 90.0 parts by mass were placed in a bag and shaken for mixing, thus giving comparative powder S (a physically mixed sample).

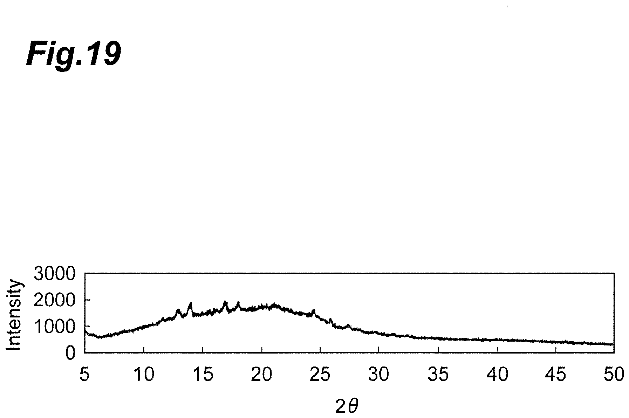

As a result of performing powder X-ray diffraction measurement on powder S, a peak derived from the crystal of agrochemical active compound C was recognized (Fig. 19).

As agrochemical compositions of the present embodiment, wettable powders (wettable powders 1 to 10) containing the above powders A, B, C, F, and J (solid dispersions as compositions according to the present embodiment) were prepared as follows.

### Production Example 21 (Wettable Powder 1)

Powder A in an amount of 50.0 part by mass was mixed with 50.0 parts by mass of Newkalgen RX-B (manufactured by Takemoto Oil & Fat Co., Ltd., sodium lignosulfonate), thus giving wettable powder 1 containing 5.0 mass% of flumioxazin as an active ingredient.

### Production Example 22 (Wettable Powder 2)

Powder A in an amount of 50.0 parts by mass was mixed with 50.0 parts by mass of SUPRAGIL MNS/90 (methylnaphthalenesulfonic acid formaline polycondensate sodium salt, manufactured by Solvay Nicca Ltd.), thus giving wettable powder 2 containing 5.0 mass% of flumioxazin as an active ingredient.

### Production Example 23 (Wettable Powder 3)

Powder A in an amount of 50.0 parts by mass was mixed with 25.0 parts by mass of Newkalgen RX-B (manufactured by Takemoto Oil & Fat Co., Ltd., sodium lignosulfonate), thus giving wettable powder 3 containing 6.7 mass% of flumioxazin as an active ingredient.

### Production Example 24 (Wettable Powder 4)

Powder B in an amount of 50.0 parts by mass was mixed with 3.0 parts by mass of Sorpol 5029-0 (sodium laurylsulfate, manufactured by Toho Chemical Industry Co., Ltd.), 2.0 parts by mass of Demol SN-B (naphthalenesulfonic acid butylnaphthalenesulfonic acid formalin condensate sodium salt, manufactured by Kao Corporation), 5.0 parts by mass of Tokusil GU-N (white carbon, manufactured by Oriental Silicas Corporation), and 40.0 parts by mass of ASP-400P (kaolin clay, manufactured by BASF), thus giving wettable powder 4 containing 5.0 mass% of agrochemical active compound A as an active ingredient.

### Production Example 25 (Wettable Powder 5)

Powder C in an amount of 16.7 parts by mass was mixed with 3.0 parts by mass of Sorpol 5029-0 (sodium laurylsulfate, manufactured by Toho Chemical Industry Co., Ltd.), 2.0 parts by mass of Demol SN-B (naphthalenesulfonic acid butylnaphthalenesulfonic acid formalin condensate sodium salt, manufactured by Kao Corporation), 5.0 parts by mass of Tokusil GU-N (white carbon, manufactured by Oriental Silicas Corporation), and 73.3 parts by mass of ASP-400P (kaolin clay, manufactured by BASF), thus giving wettable powder 5 containing 5.0 mass% of agrochemical active compound A as an active ingredient.

### Production Example 26 (Wettable Powder 6)

Powder F in an amount of 25.0 parts by mass was mixed with 3.0 parts by mass of Sorpol 5029-0 (sodium laurylsulfate, manufactured by Toho Chemical Industry Co., Ltd.), 2.0 parts by mass of Demol SN-B (naphthalenesulfonic acid butylnaphthalenesulfonic acid formalin condensate sodium salt, manufactured by Kao Corporation), 5.0 parts by mass of Tokusil GU-N (white carbon, manufactured by Oriental Silicas Corporation), and 65.0 parts by mass of ASP-400P (kaolin clay, manufactured by BASF), thus giving wettable powder 6 containing ethaboxam in 5.0 mass% as a content of active ingredient.

### Production Example 27 (Wettable Powder 7)

Powder J in an amount of 50.0 parts by mass was mixed with 50.0 parts by mass of Newkalgen RX-B (manufactured by Takemoto Oil & Fat Co., Ltd., sodium lignosulfonate), thus giving wettable powder 7 containing 5.0 mass% of agrochemical active compound C as an active ingredient.

### Production Example 28 (Wettable Powder 8)

Powder J in an amount of 50.0 parts by mass was mixed with 25.0 parts by mass of Newkalgen RX-B (manufactured by Takemoto Oil & Fat Co., Ltd., sodium lignosulfonate), thus giving wettable powder 8 containing 6.7 mass% of agrochemical active compound C as an active ingredient.

### Production Example 29 (Wettable Powder 9)

Powder J in an amount of 50.0 parts by mass was mixed with 50.0 parts by mass of SUPRAGIL MNS/90 (methylnaphthalenesulfonic acid formaline polycondensate sodium salt, manufactured by Solvay Nicca Ltd.), thus giving wettable powder 9 containing 5.0 mass% of agrochemical active compound C as an active ingredient.

### Production Example 30 (Wettable Powder 10)

Powder J in an amount of 50.0 parts by mass was mixed with 25.0 parts by mass of SUPRAGIL MNS/90 (methylnaphthalenesulfonic acid formaline polycondensate sodium salt, manufactured by Solvay Nicca Ltd.), thus giving wettable powder 10 containing 6.7 mass% of agrochemical active compound C as an active ingredient.

### (Evaluations)

The water solubilities of powders A to J (solid dispersions), comparative powders K and L (solid dispersions), comparative powders M to S (a physically mixed sample), and wettable powders 1 to 10 were measured by the following methods. The measurement temperature was all 25°C.

### [Measurement of water solubility of flumioxazin]

A solid dispersion was added in an amount of 2.5 g (250 mg in terms of flumioxazin) and a wettable powder was added in an amount of 5.0 g (250 mg in terms of flumioxazin) to 900 mL of water having a hardness of 3 and vigorously stirred. At 15 minutes, 1 hour, and 6 hours after the beginning of stirring, a part of the mixed solution was sampled and regarded as a test solution. Stirring was continued during the test. The test solution was filtered through a 0.45 µm filter. The concentration of flumioxazin contained in the filtrate was determined by high performance liquid chromatography, and the resulting concentration was regarded as the water solubility of flumioxazin. The rate of water solubility improvement (multiplication factor) relative to the water solubility of flumioxazin alone at 25°C being 2 ppm was calculated.

### [Measurement of water solubility of agrochemical active compound A]

A solid dispersion was added in an amount of 1.0 to 3.0 g (300 mg in terms of agrochemical active compound A) and a wettable powder was added in an amount of 2.5 g (125 mg in terms of agrochemical active compound A) to 500 mL of water having a hardness of 3 and vigorously stirred. Stirring was continued during the test. At 30 minutes, 1 hour and 5 hours after the beginning of stirring, a part of the mixed solution was sampled and regarded as a test solution. The test solution was filtered through a 0.45 µm filter. The concentration of agrochemical active compound A contained in the filtrate was determined by high performance liquid chromatography, and the resulting concentration was regarded as the water solubility of agrochemical active compound A. The rate of water solubility improvement (multiplication factor) relative to the water solubility of agrochemical active compound A alone at 25°C being 20 ppm was calculated.

### [Measurement of water solubility of ethaboxam]

A solid dispersion and a physically mixed sample were each added in an amount of 625 mg (125 mg in terms of ethaboxam) and a wettable powder was added in an amount of 2.5 g (125 mg in terms of ethaboxam) to 500 mL of water having a hardness of 3 and vigorously stirred. Stirring was continued during the test. At 15 minutes, 1 hour, and 6 hours after the beginning of stirring, a part of the mixed solution was sampled and regarded as a test solution. The test solution was filtered through a 0.45 µm filter. The concentration of ethaboxam contained in the filtrate was determined by high performance liquid chromatography, and the resulting concentration was regarded as the water solubility of ethaboxam. The rate of water solubility improvement (multiplication factor) relative to the water solubility of ethaboxam alone at 25°C being 5 ppm was calculated.

### [Measurement of water solubility of agrochemical active compound B]

A solid dispersion was added in an amount of 5.4 g (540 mg in terms of agrochemical active compound B) to 900 mL of water having a hardness of 3 and vigorously stirred. Stirring was continued during the test. At 15 minutes, 1 hour, and 5 hours after the beginning of stirring, a part of the mixed solution was sampled and regarded as a test solution. The test solution was filtered through a 0.45 µm filter. The concentration of agrochemical active compound B contained in the filtrate was determined by high performance liquid chromatography, and the resulting concentration was regarded as the water solubility of agrochemical active compound B. The rate of water solubility improvement (multiplication factor) relative to the water solubility of agrochemical active compound B alone at 25°C being 6 ppm was calculated.

### [Measurement of water solubility of agrochemical active compound C]

A solid dispersion was added in an amount of 300 mg (30 mg in terms of agrochemical active compound C) and a wettable powder was added in an amount of 447 to 600 mg (30 mg in terms of agrochemical active compound C) to 900 mL of water having a hardness of 3 and vigorously stirred. Stirring was continued during the test. At 15 minutes, 1 hour, and 5 hours after the beginning of stirring, a part of the mixed solution was sampled and regarded as a test solution. The test solution was filtered through a 0.45 µm filter. The concentration of agrochemical active compound C contained in the filtrate was determined by high performance liquid chromatography, and the resulting concentration was regarded as the water solubility of agrochemical active compound C. The rate of water solubility improvement (multiplication factor) relative to the water solubility of agrochemical active compound C alone at 25°C being 0.03 ppm was calculated.

The results of measuring the water solubility are shown in Table 1, Table 2, Table 3 and Table 4. The results of the rate of water solubility improvement are shown in Table 5, Table 6, Table 7 and Table 8. In the tables, "N.D." means a detection limit or lower.

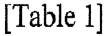

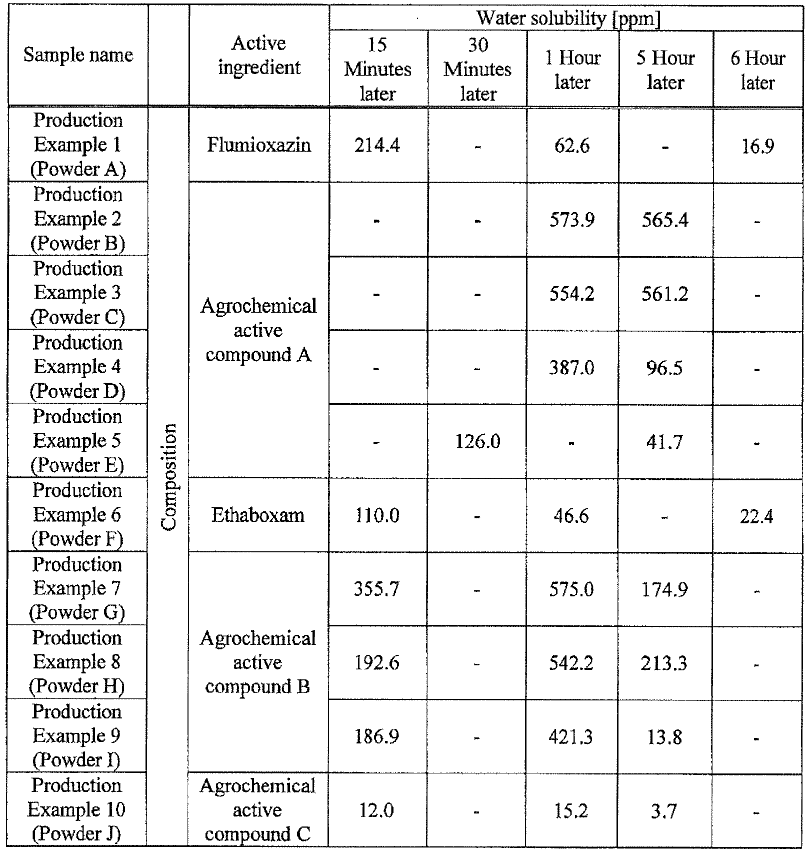

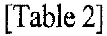

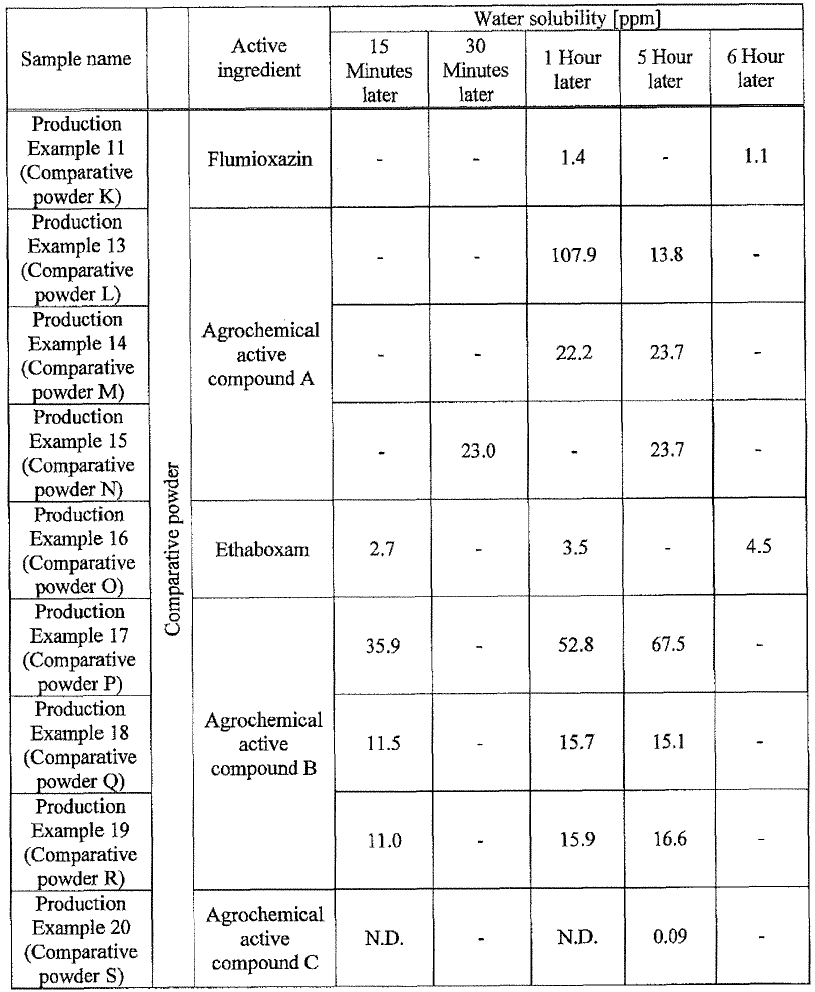

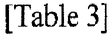

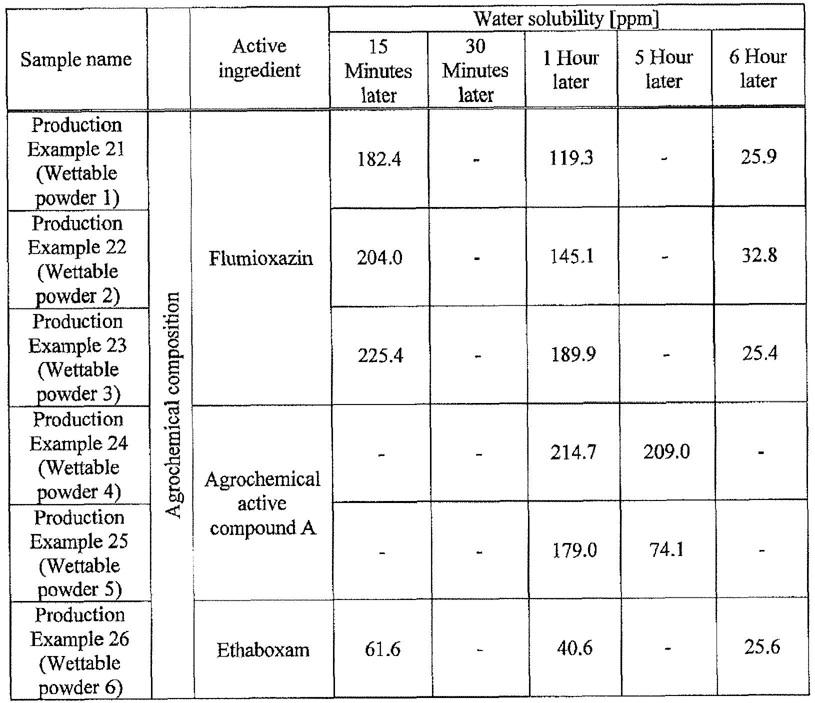

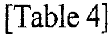

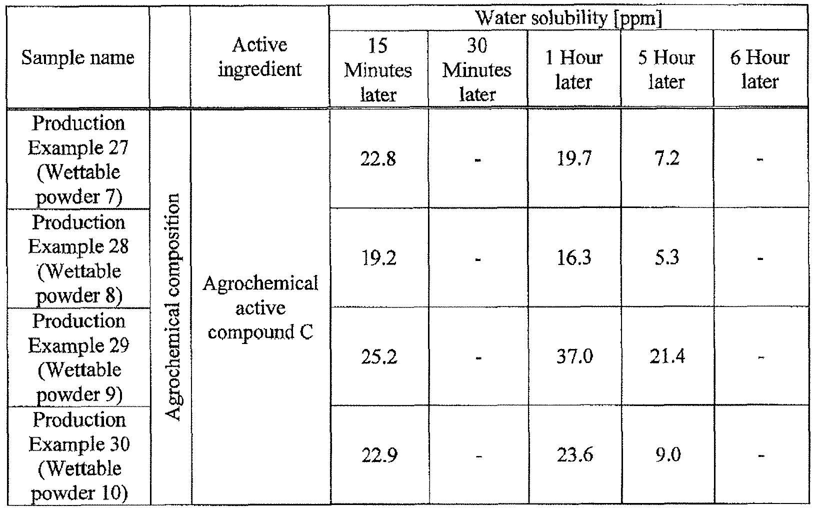

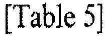

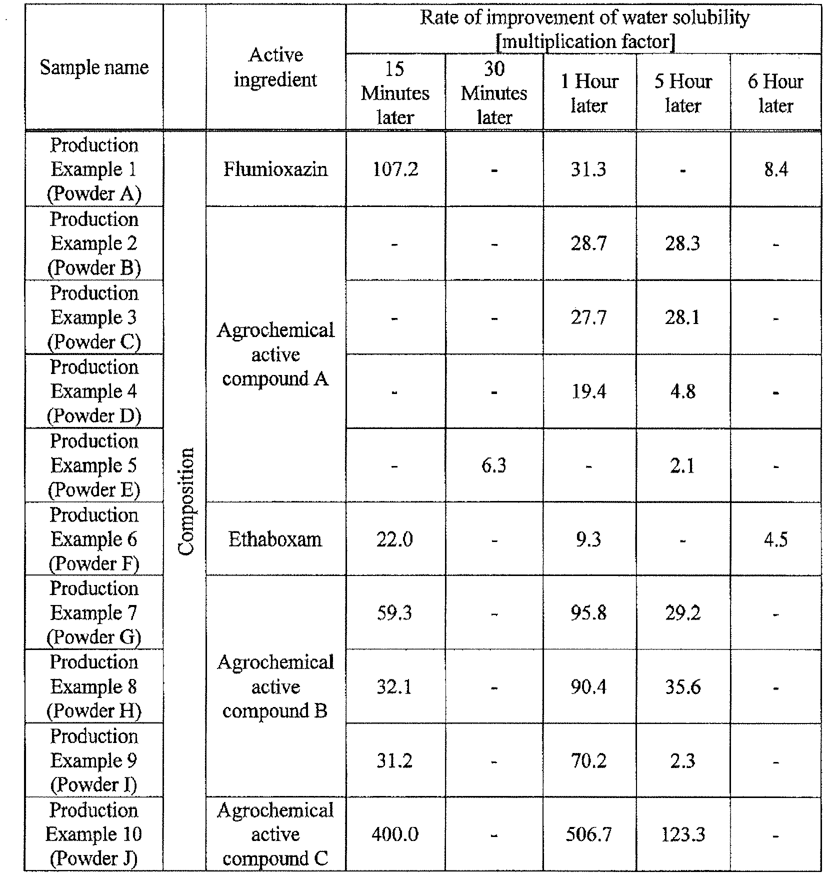

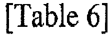

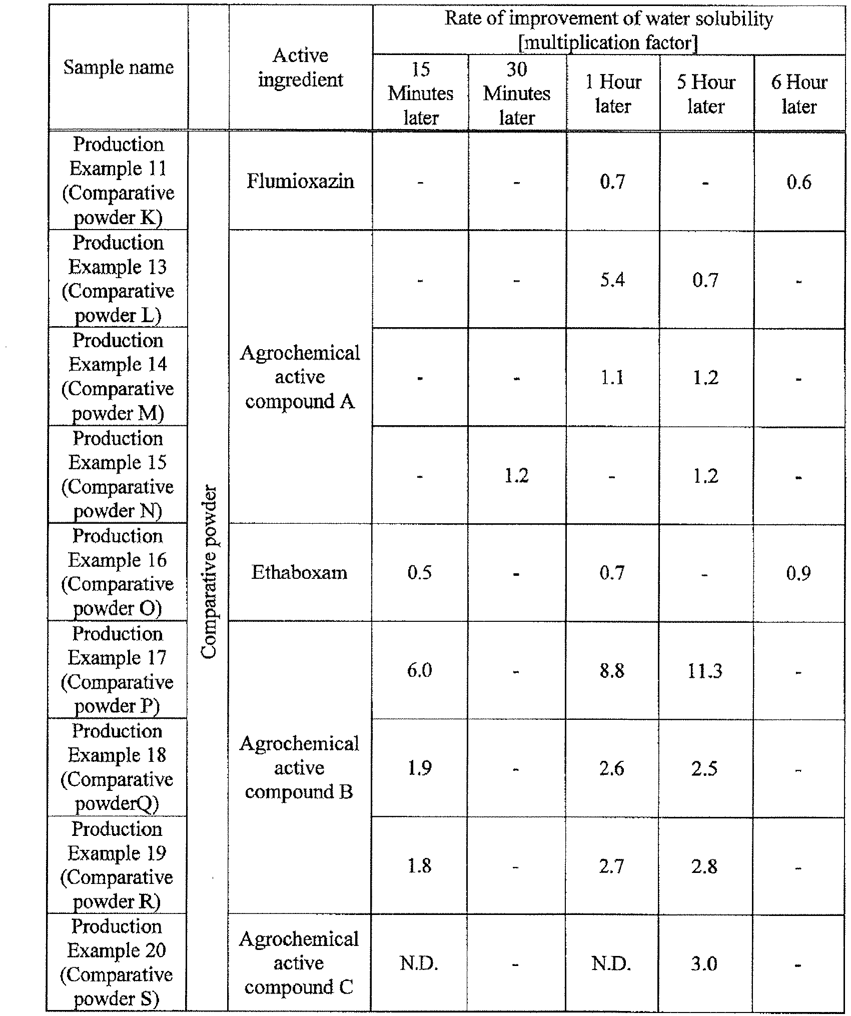

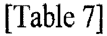

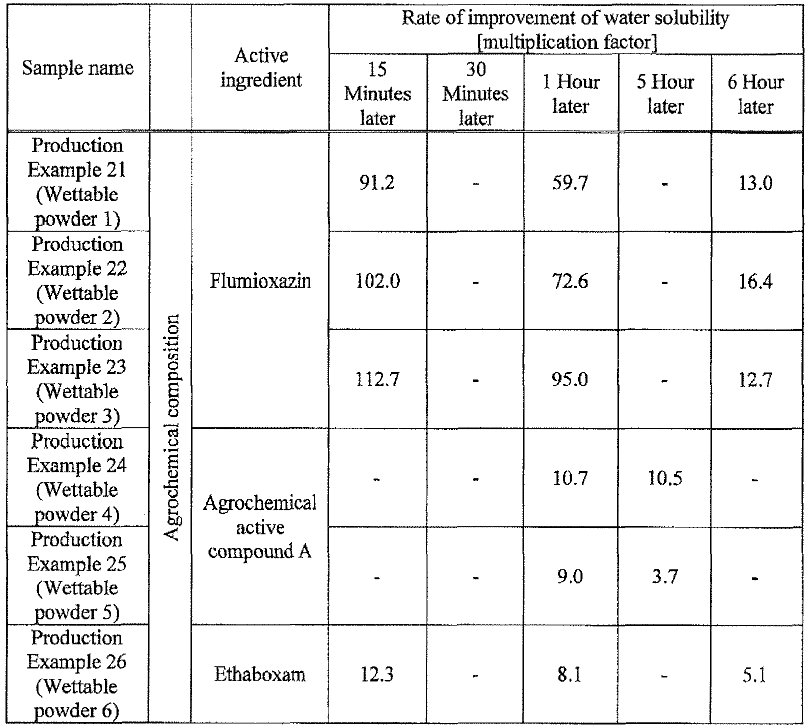

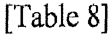

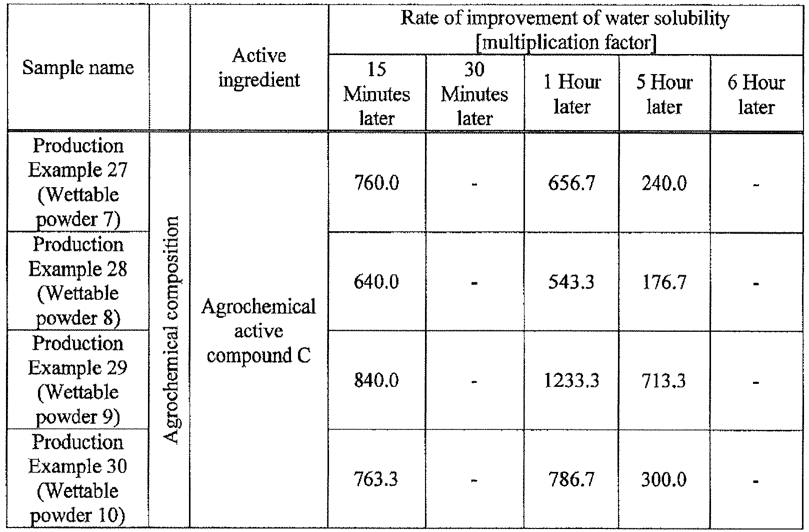

It can be understood from the results of Table 5 and Table 6 that the compositions according to the present embodiment (powders A to J, Production Examples 1 to 10) have a better rate of improvement in the water solubility (a greater ability to improve the water solubility) of a poorly water-soluble agrochemical active compound at each time point than the comparative powders (comparative powders K to S).

Moreover, it can be understood from the results of Table 1 and Table 3 that wettable powders 1 to 3 (agrochemical compositions containing an N-phenylphthalimide compound and an aromatic sulfonic acid type polymeric surfactant) of Production Examples 21 to 23 have a higher water solubility at 6 hours, i.e., can maintain the water solubility of the N-phenylphthalimide compound at a high level for a longer period of time than powder A (Production Example 1), which is a solid dispersion.

Moreover, it can be understood from the results of Table 1 and Table 4 that wettable powders 7 to 10 (agrochemical compositions containing agrochemical active compound C and an aromatic sulfonic acid type polymeric surfactant) of Production Examples 27 to 30 have a higher water solubility at 5 hours, i.e., can maintain the water solubility of agrochemical active compound C at a high level for a longer period of time than powder J (Production Example 10), which is a solid dispersion.

## Claims

1. A composition comprising:
a poorly water-soluble agrochemical active compound; and
a solid medium comprising a saponification product of polyvinyl acetate comprising at least one selected from the group consisting of a sulfonic acid group and a sulfonate group, wherein
the poorly water-soluble agrochemical active compound is dispersed in the solid medium in an amorphous state or in a semi-amorphous state, and
the poorly water-soluble agrochemical active compound refers to an agrochemical active compound that has a water solubility of less than 200 ppm at 25°C.

2. The composition according to claim 1, wherein a mass ratio of the poorly water-soluble agrochemical active compound to the saponification product is 7:3 to 1:15.

3. The composition according to claim 1 or 2, wherein a degree of saponification of the saponification product is 10 to 100 mol%.

4. The composition according to any one of claims 1 to 3, wherein the poorly water-soluble agrochemical active compound is flumioxazin, N-(1,1,3-trimethylindan-4-yl)-1-methyl-3-difluoromethylpyrazole-4-carboxylic acid amide, 1-[2-({[1-(4-chlorophenyl)-1H-pyrazol-3-yl]oxy}methyl)-3-methylphenyl]-4-methyl-5-oxo-4,5-dihydro-1H-tetrazole, ethaboxam, or 2-[3-(ethanesulfonyl)pyridin-2-yl]-5-(trifluoromethanesulfonyl)benzoxazole.

5. A method for producing a composition, comprising:
a step of dissolving a poorly water-soluble agrochemical active compound and a solid medium comprising a saponification product of polyvinyl acetate comprising at least one selected from the group consisting of a sulfonic acid group and a sulfonate group in an organic solvent to prepare a solution; and
a step of spray-drying the solution, wherein
the poorly water-soluble agrochemical active compound refers to an agrochemical active compound that has a water solubility of less than 200 ppm at 25°C.

6. A method for producing a composition, comprising:
a step of mixing a poorly water-soluble agrochemical active compound and a solid medium comprising a saponification product of polyvinyl acetate comprising at least one selected from the group consisting of a sulfonic acid group and a sulfonate group to obtain a mixture; and
a step of granulating the mixture by melt extrusion, wherein
the poorly water-soluble agrochemical active compound refers to an agrochemical active compound that has a water solubility of less than 200 ppm at 25°C.

7. A composition produced by the method according to claim 5 or 6.

8. An agrochemical composition comprising the composition according to any one of claims 1 to 4 and 7.

9. An agrochemical composition comprising the composition according to any one of claims 1 to 4 and 7, and an aromatic sulfonic acid type polymeric surfactant.

10. The agrochemical composition according to claim 9, wherein the aromatic sulfonic acid type polymeric surfactant is at least one selected from the group consisting of a lignosulfonate, a salt of a condensate of alkylarylsulfonic acid and formaldehyde, a salt of a condensate of arylsulfonic acid and formaldehyde, and a salt of a condensate of arylsulfonic acid and alkylarylsulfonic acid and formaldehyde.

11. The agrochemical composition according to claim 9 or 10, wherein a mass ratio of the poorly water-soluble agrochemical active compound to the aromatic sulfonic acid type polymeric surfactant is 2:1 to 1:10.

12. The agrochemical composition according to any one of claims 9 to 11, wherein the poorly water-soluble agrochemical active compound is flumioxazin, or 1-[2-({[1-(4-chlorophenyl)-1H-pyrazol-3-yl]oxy}methyl)-3-methylphenyl]-4-methyl-5-oxo-4,5-dihydro-1H-tetrazole.

## Patentansprüche

1. Zusammensetzung umfassend:
eine schwer wasserlösliche agrochemische aktive Verbindung; und
ein festes Medium umfassend ein Verseifungsprodukt von Polyvinylacetat umfassend mindestens eine ausgewählt aus der Gruppe bestehend aus einer Sulfonsäuregruppe und einer Sulfonatgruppe, wobei
die schwer wasserlösliche agrochemische aktive Verbindung in dem festen Medium in einem amorphen Zustand oder in einem halbamorphen Zustand dispergiert ist und
die schwer wasserlösliche agrochemische aktive Verbindung sich auf eine agrochemische aktive Verbindung bezieht, die bei 25 °C eine Wasserlöslichkeit von weniger als 200 ppm aufweist.

2. Zusammensetzung nach Anspruch 1, wobei ein Masseverhältnis der schwer wasserlöslichen agrochemischen aktiven Verbindung zu dem Verseifungsprodukt 7:3 bis 1:15 beträgt.

3. Zusammensetzung nach Anspruch 1 oder 2, wobei ein Verseifungsgrad des Verseifungsprodukts 10 bis 100 Mol-% beträgt.

4. Zusammensetzung nach einem der Ansprüche 1 bis 3, wobei die schwer wasserlösliche agrochemische aktive Verbindung Flumioxazin, N-(1,1,3-Trimethylindan-4-yl)-1-methyl-3-difluormethylpyrazol-4-carbonsäureamid, 1-[2-({[1-(4-Chlorphenyl)-1H-pyrazol-3-yl]oxy}methyl)-3-methylphenyl]-4-methyl-5-oxo-4,5-dihydro-1H-tetrazol, Ethaboxam oder 2-[3-(Ethansulfonyl)pyridin-2-yl]-5-(trifluormethansulfonyl)benzoxazol ist.

5. Verfahren für die Herstellung einer Zusammensetzung, umfassend:
einen Schritt des Lösens einer schwer wasserlöslichen agrochemischen aktiven Verbindung und eines festen Mediums umfassend ein Verseifungsprodukt von Polyvinylacetat umfassend mindestens eines ausgewählt aus der Gruppe bestehend aus einer Sulfonsäuregruppe und einer Sulfonatgruppe in einem organischen Lösungsmittel, um eine Lösung herzustellen; und
einen Schritt des Sprühtrocknens der Lösung, wobei
die schwer wasserlösliche agrochemische aktive Verbindung sich auf eine agrochemische aktive Verbindung bezieht, die bei 25 °C eine Wasserlöslichkeit von weniger als 200 ppm aufweist.

6. Verfahren für die Herstellung einer Zusammensetzung, umfassend:
einen Schritt des Mischens einer schwer wasserlöslichen agrochemischen aktiven Verbindung und eines festen Mediums umfassend ein Verseifungsprodukt von Polyvinylacetat umfassend mindestens eine ausgewählt aus der Gruppe bestehend aus einer Sulfonsäuregruppe und einer Sulfonatgruppe, um eine Mischung zu erhalten; und
einen Schritt des Granulierens der Mischung durch Schmelzextrusion, wobei
die schwer wasserlösliche agrochemische aktive Verbindung sich auf eine agrochemische aktive Verbindung bezieht, die bei 25 °C eine Wasserlöslichkeit von weniger als 200 ppm aufweist.

7. Zusammensetzung, die durch das Verfahren nach Anspruch 5 oder 6 hergestellt wird.

8. Agrochemische Zusammensetzung umfassend die Zusammensetzung nach einem der Ansprüche 1 bis 4 und 7.

9. Agrochemische Zusammensetzung umfassend die Zusammensetzung nach einem der Ansprüche 1 bis 4 und 7 und ein polymeres Tensid vom Typ aromatischer Sulfonsäure.

10. Agrochemische Zusammensetzung nach Anspruch 9, wobei das polymere Tensid vom Typ aromatischer Sulfonsäure mindestens eines ist ausgewählt aus der Gruppe bestehend aus einem Lignosulfonat, einem Salz eines Kondensats von Alkylarylsulfonsäure und Formaldehyd, einem Salz eines Kondensats von Arylsulfonsäure und Formaldehyd und einem Salz eines Kondensats von Arylsulfonsäure und Alkylarylsulfonsäure und Formaldehyd.

11. Agrochemische Zusammensetzung nach Anspruch 9 oder 10, wobei ein Masseverhältnis der schwer wasserlöslichen agrochemischen aktiven Verbindung zu dem polymeren Tensid vom Typ aromatischer Sulfonsäure 2:1 bis 1:10 beträgt.

12. Agrochemische Zusammensetzung nach einem der Ansprüche 9 bis 11, wobei die schwer wasserlösliche agrochemischen aktive Verbindung Flumioxazin oder 1-[2-({[1-(4-Chlorphenyl)-1H-pyrazol-3-yl]oxy}methyl)-3-methylphenyl]-4-methyl-5-oxo-4,5-dihydro-1H-tetrazol ist.

## Revendications

1. Composition comprenant:
un composé actif agrochimique peu soluble dans l'eau; et
un milieu solide comprenant un produit de saponification de poly(acétate de vinyle) comprenant au moins l'un sélectionné dans le groupe constitué d'un groupe acide sulfonique et d'un groupe sulfonate,
dans laquelle le composé actif agrochimique peu soluble dans l'eau est dispersé dans le milieu solide sous un état amorphe ou sous un état semi-amorphe, et
le composé actif agrochimique peu soluble dans l'eau concerne un composé actif agrochimique qui présente une solubilité dans l'eau inférieure à 200 ppm à 25°C.

2. Composition selon la revendication 1, dans laquelle un rapport en masse du composé actif agrochimique peu soluble dans l'eau au produit de saponification est de 7:3 à 1:15.

3. Composition selon la revendication 1 ou 2, dans laquelle un degré de saponification du produit de saponification est de 10 à 100 % en mole.

4. Composition selon l'une quelconque des revendications 1 à 3, dans laquelle le composé actif agrochimique peu soluble dans l'eau est la flumioxazine, l'amide d'acide N-(1,1,3-triméthylindan-4-yl)-1-méthyl-3-difluorométhylpyrazole-4-carboxylique, le 1-[2-({[1-(4-chlorophényl)-1H-pyrazol-3-yl]oxy}méthyl)-3-méthylphényl]-4-méthyl-5-oxo-4,5-dihydro-1H-tétrazole, l'éthaboxame, ou le 2-[3-(éthanesulfonyl)pyridin-2-yl]-5-(trifluorométhanesulfonyl)benzoxazole.

5. Procédé de production d'une composition, comprenant:
une étape de dissolution d'un composé actif agrochimique peu soluble dans l'eau et d'un milieu solide comprenant un produit de saponification de poly(acétate de vinyle) comprenant au moins l'un sélectionné dans le groupe constitué d'un groupe acide sulfonique et d'un groupe sulfonate dans un solvant organique pour préparer une solution; et
une étape de séchage par pulvérisation de la solution, dans lequel
le composé actif agrochimique peu soluble dans l'eau concerne un composé actif agrochimique qui présente une solubilité dans l'eau inférieure à 200 ppm à 25°C.

6. Procédé de production d'une composition, comprenant:
une étape de mélange d'un composé actif agrochimique peu soluble dans l'eau et d'un milieu solide comprenant un produit de saponification de poly(acétate de vinyle) comprenant au moins l'un sélectionné dans le groupe constitué d'un groupe acide sulfonique et d'un groupe sulfonate pour obtenir un mélange; et
une étape de granulation du mélange par extrusion à l'état fondu, dans lequel
le composé actif agrochimique peu soluble dans l'eau concerne un composé actif agrochimique qui présente une solubilité dans l'eau inférieure à 200 ppm à 25°C.

7. Composition produite par le procédé selon la revendication 5 ou 6.

8. Composition agrochimique comprenant la composition selon l'une quelconque des revendications 1 à 4 et 7.

9. Composition agrochimique comprenant la composition selon l'une quelconque des revendications 1 à 4 et 7, et un tensioactif polymère type acide sulfonique aromatique.

10. Composition agrochimique selon la revendication 9, dans laquelle le tensioactif polymère type acide sulfonique aromatique est au moins l'un sélectionné dans le groupe constitué d'un lignosulfonate, d'un sel d'un condensat d'acide alkylarylsulfonique et de formaldéhyde, d'un sel d'un condensat d'acide arylsulfonique et de formaldéhyde, et d'un sel d'un condensat d'acide arylsulfonique et d'acide alkylarylsulfonique et de formaldéhyde.

11. Composition agrochimique selon la revendication 9 ou 10, dans laquelle un rapport en masse du composé actif agrochimique peu soluble dans l'eau au tensioactif polymère type acide sulfonique aromatique est de 2:1 à 1:10.

12. Composition agrochimique selon l'une quelconque des revendications 9 à 11, dans laquelle le composé actif agrochimique peu soluble dans l'eau est la flumioxazine, ou le 1-[2-({[1-(4-chlorophényl)-1H-pyrazol-3-yl]oxy}méthyl)-3-méthylphényl]-4-méthyl-5-oxo-4,5-dihydro-1H-tétrazole.
